(19) Europäisches Patentamt
European Patent Office
Office européen des brevets

(11) **EP 2 044 542 B1**

(12) **FASCICULE DE BREVET EUROPEEN**

(45) Date de publication et mention
de la délivrance du brevet:
**31.10.2012 Bulletin 2012/44**

(51) Int Cl.:
***G06F 17/50*** *(2006.01)*

(21) Numéro de dépôt: **07803854.4**

(86) Numéro de dépôt international:
**PCT/FR2007/001149**

(22) Date de dépôt: **05.07.2007**

(87) Numéro de publication internationale:
**WO 2008/003867 (10.01.2008 Gazette 2008/02)**

(54) **PROCEDE D'ANALYSE D'UN ASSEMBLAGE DE PIECES PAR RAPPORT A UN CRITERE DE CONCEPTION PREDETERMINE**

VERFAHREN ZUR UNTERSUCHUNG EINER TEILEANORDNUNG IN BEZUG AUF EIN VORGEGEBENES ENTWURFSKRITERIUM

METHOD OF ANALYZING AN ASSEMBLY OF PARTS WITH RESPECT TO A PREDETERMINED DESIGN CRITERION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.07.2006 FR 0606110**

(43) Date de publication de la demande:
**08.04.2009 Bulletin 2009/15**

(73) Titulaire: **Airbus Operations**
**31060 Toulouse (FR)**

(72) Inventeur: **RUTKA, André**
**F-31000 Toulouse (FR)**

(74) Mandataire: **Santarelli**
**14 Avenue de la Grande Armée**
**B.P. 237**
**75822 Paris Cedex 17 (FR)**

(56) Documents cités:
**FR-A- 2 860 317          JP-A- 6 103 331**
**JP-A- 9 190 446          US-A- 6 112 022**
**US-A1- 2005 080 502     US-A1- 2005 144 196**

## Description

L'invention est relative à un procédé d'analyse d'un assemblage de pièces par rapport à au moins un critère de conception prédéterminé, ou d'une partie de cet assemblage.

Dans différents secteurs industriels tels que l'aéronautique ou l'automobile, on conçoit de nos jours des structures mécaniques de plus en plus complexes qui intègrent très souvent des aspects par exemple électriques, thermiques ou relatifs à des problèmes d'étanchéité.

Les structures ainsi conçues doivent répondre à un grand nombre d'exigences tant mécaniques qu'électriques.

A titre d'exemple, lors de la conception d'une structure aussi complexe qu'un aéronef, qui peut inclure plusieurs centaines, voire plusieurs milliers de pièces assemblées les unes avec les autres, un cahier des charges très précis des caractéristiques et performances électriques de la structure doit être respecté.

Par exemple, on doit s'assurer du bon comportement électrique d'une structure aéronautique vis-à-vis de la foudre.

Aujourd'hui, des mesures de conductivité électrique sont pratiquées sur la structure réelle pour tester le comportement électrique de celle-ci.

Or, lorsque les résultats des mesures révèlent que le comportement électrique de la structure n'est pas satisfaisant, il faut revoir toute la conception de la structure afin de déceler l'erreur ou les erreurs de conception.

Pour une structure composée de plusieurs centaines ou milliers de pièces, on comprend aisément qu'une telle tâche va induire un retard considérable risquant même de pénaliser la livraison du produit fini.

En outre, cette tâche va mobiliser du personnel qualifié sur une période indéterminée et va induire des coûts non négligeables.

Le document US 2005/080502 A1 divulgue un outil d'aide à la conception par ordinateur de systèmes électriques matériels.

Le document US 2005/144196 A1 divulgue une structure de données pour représenter des objets multidimensionnels.

Le document JP 06 103331 A divulgue un dispositif pour éditer un diagramme de circuit électrique.

Le document US-A-6 112 022 divulgue un procédé pour simuler des circuits ULSINLSI.

Au vu de ce qui précède, il serait donc particulièrement utile, de pouvoir déterminer le comportement électrique, d'un point de vue qualitatif, d'un assemblage de pièces complexe avant sa réalisation physique.

De façon plus générale, il serait utile de pouvoir analyser qualitativement, par rapport à un ou plusieurs critères de conception prédéterminés, le comportement physique d'un assemblage de pièces qui peut être complexe (tant au niveau du nombre de pièces le composant que du nombre de métiers ou de domaines techniques différents impliqués dans sa conception) et ce, en vue de sa fabrication.

La présente invention a ainsi pour objet un procédé selon la revendication 1.

L'invention permet, avant qu'un assemblage de pièces ou une partie de celui-ci n'ait été fabriqué, de l'analyser par rapport à un ou plusieurs critères de conception prédéterminés.

Ce ou ces critères sont qualitatifs et l'analyse de l'assemblage par rapport à celui- ci ou à ceux-ci va permettre de déterminer le comportement physique (qualitatif) de cet assemblage en réponse à une ou plusieurs contraintes (ou règles) qualitatives de conception.

L'assemblage étant fidèlement reproduit grâce aux maquettes numériques des pièces, son analyse fournit un résultat directement exploitable pour sa conception, contrairement aux modèles utilisés pour appliquer les méthodes des éléments finis.

En fonction du résultat de cette analyse, l'assemblage peut ainsi être validé par rapport au(x) critère(s) pris en compte ou modifié.

L'analyse de l'assemblage peut consister à déterminer ou à vérifier sa conformité au(x) critère(s) de conception prédéterminé(s) et permettre ainsi de s'assurer, avant fabrication, que l'assemblage respecte bien des règles de conception.

Des exemples de critères de conception sont fournis ci-après.

On peut ainsi vérifier, par exemple, si l'assemblage ou une partie de celui-ci est étanche à un ou plusieurs fluides (eau, air...) en vérifiant localement au niveau des pièces en contact de l'assemblage celles qui présentent une aptitude à être étanche et qui possèdent donc ce que l'on appelle un attribut d'étanchéité.

En pratique, on vérifie par exemple si les pièces ont subi un traitement d'étanchéité ou si on leur a appliqué un joint d'étanchéité.

Cette vérification peut, par exemple, être réalisée sur une partie de l'assemblage afin de valider la fonction d'étanchéité d'une ou de plusieurs zones ou de mettre en évidence de telles zones dans la structure.

Par ailleurs, on peut vérifier si les différentes pièces en contact de l'assemblage ont subi un traitement de surface (par exemple du type application d'un revêtement de peinture isolante) afin de déterminer l'impact qu'un tel traitement local peut avoir sur le comportement physique de l'assemblage ou d'une partie de celui-ci.

L'application d'un traitement de surface sur plusieurs pièces de l'assemblage peut en effet affecter le comportement physique qui est attendu de l'assemblage ou d'une partie de celui-ci compte tenu des propriétés physiques des matériaux constitutifs des pièces.

A titre d'exemple, l'application d'un revêtement d'une peinture électriquement isolante sur des pièces de l'assemblage peut modifier le comportement de cet assemblage ou d'une partie de celui-ci vis-à-vis de la propagation du flux électrique. L'invention permet, dans un tel cas, de déterminer d'un point de vue qualitatif le comportement physique de l'assemblage ou d'une partie vis-à-vis de la propagation du flux électrique et de vérifier si ce comportement est conforme au critère de la propagation du flux.

En outre, il est possible de vérifier le comportement physique d'un assemblage par rapport à des contraintes d'assemblage (les pièces assemblées devant par exemple être disposées à une distance minimale d'un objet, par exemple, pour des raisons de sécurité ou autre) ou à un mode d'assemblage donné (soudage de pièces assemblées...).

L'invention permet également de valider une architecture d'une structure faite de pièces assemblées et, par exemple, d'identifier des éventuels problèmes de ségrégation dans la structure. Par exemple, lors de l'analyse d'un assemblage de pièces il peut être prévu d'analyser son comportement par rapport à un ou plusieurs critères en cas de dysfonctionnement d'une partie de l'assemblage. Ainsi, dans un assemblage qui peut représenter des circuits électrique dont certains sont doublés, on cherche à vérifier qu'en cas de coupure d'un des circuits doublés les autres circuits fonctionnent (transmission d'un flux électrique dans ces autres circuits par exemple).

Pour analyser l'assemblage et, plus particulièrement, pour vérifier/déterminer la conformité de cet assemblage vis-à-vis de l'un ou de plusieurs des critères précités ou d'autres critères, l'invention prévoit de déterminer dans l'assemblage, de façon individualisée, des couples de pièces. Il s'agit plus particulièrement de déterminer, au sein de la structure, des premiers couples de pièces représentatifs chacun d'un contact mécanique entre les deux pièces du couple et, parmi ces premiers couples, des seconds couples de pièces qui sont conformes au(x) critère(s) choisi(s).

On notera que les premiers couples peuvent identifier tous les contacts mécaniques établis entre toutes les pièces de l'assemblage ou seulement certains d'entre eux si l'on ne s'intéresse qu'à une partie de la structure assemblée.

Pour la même raison, les seconds couples peuvent ne comprendre que certains parmi tous les seconds couples qui sont déterminables à partir des premiers couples.

En fonction d'un ensemble de seconds couples de pièces identifié, qui peut comprendre tous les seconds couples déterminés, on analyse la façon dont cet ensemble satisfait au(x) critère(s) prédéterminé(s) (comportement physique de l'ensemble). Par exemple, en partant d'une pièce sélectionnée dans l'assemblage et à partir de l'ensemble précité on peut vérifier l'éventuelle conformité au(x) critère(s) du comportement physique de l'assemblage ou d'une partie de celui-ci.

La sélection d'une pièce permet d'initialiser une investigation par rapport à une problématique donnée et facilite l'exploitation du résultat par l'utilisateur final. On va ainsi parcourir un chemin à partir d'une source qui peut être, par exemple, un équipement ou un harnais électrique dans le cas d'une analyse électrique, ou encore une pièce d'un réservoir dans le cas d'une analyse d'étanchéité.

En identifiant ainsi de façon formelle des couples de pièces parmi un assemblage de pièces on obtient, en quelque sorte, une cartographie de l'assemblage représentée par ces couples et qui peut être mémorisée.

Cette décomposition de l'assemblage, ou d'une partie de celui-ci, en premiers et seconds couples de pièces offre l'avantage de la modularité. En effet, si l'assemblage est modifié ultérieurement il suffit d'identifier les couples de pièces affectés par la modification et de les modifier en conséquence, par exemple, en créant de nouveaux premiers et seconds couples de pièces en cas d'ajout de nouvelles pièces à la structure existante. Il est également possible de supprimer des couples en cas de suppression de pièces dans l'assemblage.

Il n'est donc pas nécessaire de revoir toute la conception de l'assemblage et de déterminer à nouveau l'ensemble des premiers et seconds couples pour pouvoir vérifier la conformité de l'assemblage ainsi modifié, ce qui offre un gain de temps considérable et réduit le volume de travail à effectuer.

Par ailleurs, l'analyse de l'assemblage par rapport à au moins un critère de conception peut également consister à analyser le comportement qualitatif de l'assemblage lorsqu'une modification a été apportée à une ou plusieurs pièces de cet assemblage (ajout et/ou retrait de pièces, modification d'une partie de pièce(s), changement de position d'une pièce, ou changement d'un matériau d'une pièce...).

En d'autres termes, il s'agit de déterminer quelles sont les pièces de l'assemblage qui sont concernées par la ou les modifications.

Selon cet autre aspect, lors de la détermination de seconds couples de pièces parmi les premiers couples de pièces en contact, on détermine ces seconds couples par rapport à un critère de conception qui peut être l'état de conception des pièces dans le processus de conception et de développement.

Ainsi, le cycle de développement des pièces de l'assemblage est pris en compte lors de l'analyse de modification(s) apportée(s) à l'assemblage.

Par conséquent, lors de la détermination de seconds couples, on tient compte du fait que certaines pièces sont déjà fabriquées ou sont à un stade de conception ou de développement trop avancé pour pouvoir encore être modifiées. De telles pièces ne pourront donc être concernées par les modifications.

Selon une caractéristique, l'assemblage de pièces comporte plusieurs sous-assemblages ou parties comprenant chacun une pluralité de pièces, les sous-assemblages étant conçus séparément les uns des autres.

Ainsi, l'invention permet de déterminer par analyse qualitative le comportement physique, par rapport à un ou plusieurs critères prédéterminés (voir les exemples ci-dessus), d'un assemblage qui a été initialement conçu par morceaux séparés dans des zones (sites de conception) géographiquement distinctes et, parfois même, dans des environnements de conception différents.

L'invention offre donc une possibilité d'intégrer, pour la première fois avant fabrication, tous les sous-assemblages dans un seul et même assemblage et de déterminer le comportement réel de celui-ci par rapport au comportement prévisible vis-à-vis d'un critère de conception prédéterminé (étanchéité, résistance au feu, résistance aux chocs, blindage électromagnétique...).

Ainsi, même si les sous-assemblages sont déjà conçus, leur conception peut être revue, après intégration au sein de l'assemblage final, pour tenir compte des interactions avec les autres sous-assemblages et d'éventuels dysfonctionnements détectés par l'analyse selon l'invention.

Selon une autre caractéristique, l'assemblage comprend au moins plusieurs centaines de pièces, voire plusieurs milliers.

L'invention est particulièrement adaptée notamment pour des assemblages faisant intervenir un grand nombre de pièces.

Elle est aussi adaptée notamment pour des assemblages faisant intervenir un grand nombre de pièces et de responsabilités différentes (nombreux intervenants différents, que ce soit au niveau des métiers/domaines techniques impliqués ou encore en terme d'équipes) et qui posent donc des problèmes d'intégration.

L'invention permet de vérifier la bonne intégration des différents composants et également d'identifier rapidement les déficiences au sein de l'assemblage.

Selon encore une autre caractéristique, l'analyse de l'assemblage de pièces ou d'une partie de celui-ci par rapport à au moins un critère de conception prédéterminé comprend la détermination d'au moins un chemin emprunté par un flux d'une grandeur physique dans l'assemblage ou une partie de celui-ci, les étapes du procédé étant plus particulièrement les étapes suivantes :

- identification des pièces de l'assemblage et détermination des premiers et seconds couples de pièces, l'étape de détermination des seconds couples de pièces étant effectuée en fonction des propriétés des matériaux constitutifs des pièces des premiers couples de pièces, les deux pièces de chaque second couple étant aptes à propager le flux d'une pièce à l'autre,
- sélection d'au moins une des pièces de l'assemblage,
- identification, parmi les pièces des seconds couples de pièces, des pièces qui sont aptes à propager le flux provenant directement ou indirectement de ladite au moins une pièce sélectionnée sous la forme d'un ensemble de seconds couples de pièces,
- en fonction des pièces ainsi identifiées, détermination d'au moins un chemin emprunté par le flux dans l'assemblage ou une partie de celui-ci à partir de ladite au moins une pièce sélectionnée.

Grâce à l'invention proposée, il est possible d'identifier le trajet emprunté par le flux dans l'assemblage sans que ce dernier n'ait encore été fabriqué, ce qui permet de prévoir de façon qualitative le comportement de l'assemblage vis-à-vis de la propagation du flux (sans réaliser de calcul quantifié de flux), à partir des données de conception en trois dimensions de l'assemblage.

On peut ainsi déceler facilement des erreurs de conception dans l'assemblage comme, par exemple, identifier des pièces isolées de cet assemblage qui ne sont en contact mécanique avec aucune autre pièce (absence de boucles).

Ensuite, il peut être envisagé de visualiser ces pièces.

Il est également possible de déceler des erreurs dans le choix des matériaux utilisés pour la réalisation de certaines pièces.

Selon l'art antérieur, il aurait fallu attendre la fabrication de l'assemblage et les résultats de mesures effectuées sur cette dernière pour constater une défectuosité, engendrant ainsi des retards et des coûts incompatibles avec les contraintes de production industrielles.

En outre, selon l'art antérieur l'identification de la pièce ou des pièces défectueuses aurait pris beaucoup plus de temps qu'avec l'invention.

L'invention permet de déterminer qualitativement, donc rapidement, un ou plusieurs chemins par lesquels le flux se propage dans l'assemblage.

Ainsi, si le modèle qualitatif révèle des erreurs de conception, ce n'est pas la peine d'élaborer un modèle plus sophistiqué permettant d'évaluer quantitativement la propagation du flux dans l'assemblage.

En cas d'erreurs de conception, il est toutefois possible que le flux ne puisse pas se propager dans tout l'assemblage.

De façon générale, après avoir déterminé un chemin pour le flux on peut prendre une décision quant à la vérification de la conformité de l'assemblage ou d'une partie de celui-ci par rapport à un critère de conception prédéterminé (aptitude à propager un flux par exemple ou isolation électrique d'une partie de l'assemblage...).

Selon une caractéristique, le procédé comporte une étape de détermination du rang de contact entre les pièces identifiées des seconds couples de pièces et ladite au moins une pièce sélectionnée, une pièce en contact direct avec ladite au moins une pièce sélectionnée étant une pièce de rang de contact 1, un contact indirect étant identifié par un rang de contact supérieur à 1.

L'identification du rang de contact des pièces de seconds couples permet de mettre en évidence les effets de second ou de troisième ordre dans l'assemblage. Couplée à l'occurrence d'apparition des pièces dans un arbre de propagation représentant l'assemblage, l'identification du rang de contact des pièces de seconds couples se révèle être un bon indicateur de la sensibilité au critère de la pièce, et donc permet de guider le concepteur vers une meilleure conception du produit.

Selon une caractéristique, la propriété des matériaux qui est prise en compte est la capacité des matériaux à transmettre le flux de la grandeur physique.

La propriété des matériaux est, par exemple, la conductivité électrique, la grandeur physique est le courant électrique et le flux est électrique.

On va ainsi évaluer le comportement électrique de l'assemblage (par exemple la tenue à la foudre de la structure), et notamment déterminer la façon dont le courant électrique se propage dans cet assemblage.

Par ailleurs, il est également possible d'évaluer la capacité de l'assemblage à transmettre la chaleur (flux thermique) en tenant compte de la conductivité thermique des matériaux constitutifs des pièces.

Selon une caractéristique, le procédé comporte une étape de visualisation des seconds couples de pièces de l'assemblage, ce qui va servir à la détermination du ou des chemins.

Selon une caractéristique, les pièces sont visualisées dans un tableau à deux dimensions, ayant comme en-têtes de lignes et de colonnes les différentes pièces de l'assemblage, et ayant des cases situées à l'intersection des différentes lignes et colonnes et qui comportent chacune, pour le couple correspondant de pièces, une information sur l'aptitude ou non à propager le flux entre les pièces correspondantes du couple.

Cette aptitude ou non à propager le flux se caractérise, pour le flux électrique ou thermique, par la présence ou l'absence d'un contact électrique ou thermique entre les pièces.

Selon une caractéristique, le procédé comporte une étape d'identification, parmi les premiers couples de pièces, des pièces non conductrices du flux.

Ceci permet de vérifier si, dans certaines zones de l'assemblage, on respecte un cahier des charges donné.

Selon une caractéristique, le procédé comporte une étape de visualisation de pièces non conductrices du flux, ce qui est un moyen de vérification rapide de l'existence et de l'emplacement de telles pièces.

Selon une caractéristique, le procédé comporte une étape d'identification et éventuellement de visualisation des pièces qui ne sont en contact mécanique avec aucune autre pièce, permettant ainsi de détecter des erreurs de conception.

Selon une caractéristique, le procédé comporte une étape de visualisation des pièces des seconds couples de pièces qui sont aptes à propager le flux provenant directement ou indirectement de ladite au moins une pièce sélectionnée.

Il est ainsi possible de vérifier si le flux se propage entre deux pièces de l'assemblage.

Selon une autre caractéristique, le procédé comporte une étape de visualisation du rang de contact entre les pièces identifiées des seconds couples de pièces.

Dans le cas d'une analyse de propagation de modification, la visualisation du rang de contact des pièces permet de mettre en évidence les risques d'impacts non directs et permet donc une meilleure anticipation.

Selon une caractéristique, les pièces des seconds couples sont visualisées dans un tableau à deux dimensions, ayant comme en-têtes de lignes et de colonnes les différentes pièces de l'assemblage et ayant des cases situées à l'intersection des différentes lignes et colonnes et qui comportent chacune, pour le couple correspondant de pièces, une information sur l'aptitude ou non à propager le flux entre les pièces correspondantes du couple et, en cas d'aptitude, chaque case concernée comportant une information sur le rang du contact entre les pièces correspondantes.

La visualisation matricielle ou sous forme de tableau est utilisée pour évaluer l'architecture de l'assemblage. Les pièces fortement impactées ou impactantes sont clairement identifiables.

Plus particulièrement, les pièces sont visualisées dans un tableau à deux dimensions, ayant comme en-têtes de lignes et de colonnes les différentes pièces de l'assemblage, et ayant des cases situées à l'intersection des différentes lignes et colonnes et qui comportent chacune, pour le couple correspondant de pièces, une information sur l'aptitude ou non à propager le flux d'une pièce à l'autre du couple et, en cas d'aptitude, chaque case concernée comportant une information sur le rang du contact entre les pièces correspondantes, l'en-tête de la ligne ou de la colonne de ladite au moins une pièce sélectionnée étant identifié sur le tableau, ledit en-tête permettant d'identifier, par l'intermédiaire des cases comportant une information sur l'aptitude à propager directement le flux d'une pièce à l'autre, les en-têtes des colonnes ou des lignes relatives aux pièces correspondantes des seconds couples dont ladite au moins une pièce sélectionnée fait partie et qui sont en contact direct avec celle-ci, ces pièces étant appelées pièces de rang de contact 1 et, de façon générale, les en-têtes des lignes ou des colonnes qui sont relatives aux pièces de rang de contact n permettant d'identifier, par l'intermédiaire des cases comportant une information sur l'aptitude à propager le flux indirectement suivant un rang de contact n+1, les en-têtes des colonnes ou des lignes qui sont relatives aux pièces correspondantes des seconds couples appelées pièces de rang de contact n+1.

Selon un autre mode de réalisation, les pièces sont visualisées dans un arbre de propagation ayant, pour racine, ladite au moins une pièce sélectionnée et, pour branches, les pièces des seconds couples avec lesquelles elle est en contact direct ou indirect, lesdites pièces des seconds couples étant organisées suivant une arborescence hiérarchique établie en fonction de différents niveaux de propagation dans l'arbre, chaque niveau correspondant au rang du contact entre ladite au moins une pièce sélectionnée et chacune desdites pièces des seconds couples.

La visualisation sous forme d'arbre est effectuée après détermination d'un chemin et permet de mettre en évidence les boucles dans l'assemblage, ainsi que le nombre d'occurrences des pièces.

Selon un autre mode de réalisation, les pièces sont visualisées dans une représentation en trois dimensions de la structure, les différentes pièces des seconds couples avec lesquelles ladite au moins une pièce sélectionnée est en contact direct ou indirect étant identifiées de façon différente suivant le rang du contact.

Selon une caractéristique, l'identification de pièces est réalisée par l'affectation de couleurs auxdites pièces, facilitant ainsi l'analyse visuelle du comportement de l'assemblage vis-à-vis de la propagation du flux.

Selon une caractéristique, le procédé comprend une étape préalable de détermination des matériaux qui sont conducteurs du flux et de ceux qui sont non conducteurs du flux à partir des matériaux constitutifs des différentes pièces de l'assemblage.

Selon une caractéristique, l'étape de détermination est effectuée par rapport à un seuil de conductivité du flux préalablement fixé, ce qui revient à fixer un seuil de résistivité quand il s'agit du flux électrique ou thermique.

Selon une caractéristique, le procédé comprend une étape préalable de détermination d'une liste de couples de matériaux qui sont incompatibles l'un avec l'autre, ce qui permet d'éviter d'éventuelles erreurs de conception.

Selon une caractéristique, le procédé comporte une étape d'identification des matériaux incompatibles les uns avec les autres pour les pièces identifiées dans les premiers couples de pièces de l'assemblage.

Il est ainsi possible de mettre en évidence d'éventuelles erreurs de conception.

Selon une caractéristique, l'étape de sélection prévoit la sélection de deux pièces de l'assemblage en vue de déterminer au moins un chemin emprunté par le flux entre ces deux pièces. On choisit ainsi un point d'entrée et un point de sortie pour le flux dans l'assemblage afin de déterminer si le flux peut se transmettre entre ces deux pièces et par quel(s) chemin(s) à l'intérieur de la structure.

Selon une caractéristique, le procédé comporte une étape de visualisation dudit au moins un chemin emprunté par le flux, permettant ainsi une analyse rapide d'éventuelles erreurs de conception.

Selon une caractéristique, l'assemblage de pièces est une structure d'aéronef.

Dans une telle structure, on rencontre des assemblages comprenant un nombre très élevé de pièces, ce qui rend particulièrement intéressant l'application du procédé selon l'invention à de tels assemblages.

L'invention vise aussi un procédé de fabrication d'un assemblage de pièces, caractérisé en ce qu'il comprend les étapes suivantes :

- analyse de l'assemblage par rapport à au moins un critère de conception prédéterminé conformément au procédé brièvement exposé ci-dessus

- et, en cas de décision de validation de l'assemblage par rapport audit au moins un critère, fabrication de l'assemblage.

On notera que, de façon plus générale, après l'étape d'analyse, le procédé peut comporter une étape de décision qui dépend du résultat de l'étape d'analyse.

Ainsi, en fonction du résultat, une décision est prise quant à la fabrication de l'assemblage ou à la modification de l'assemblage de pièces préalablement à la fabrication.

La présente invention a aussi pour objet un procédé de détermination d'au moins un chemin emprunté par un flux d'une grandeur physique dans un assemblage de pièces, caractérisé en ce qu'il comporte les étapes suivantes effectuées à partir des données numériques définissant l'assemblage des pièces en trois dimensions :

- identification des pièces de l'assemblage,
- identification des pièces de l'assemblage qui sont en contact mécanique les unes avec les autres sous la forme de premiers couples de pièces,
- en fonction des propriétés des matériaux constitutifs des différentes pièces desdits premiers couples de pièces, identification, parmi lesdits premiers couples de pièces, des pièces de l'assemblage qui sont aptes à propager le flux d'une pièce à l'autre sous la forme de seconds couples de pièces,
- sélection d'au moins une des pièces de l'assemblage,
- identification parmi les pièces desdits seconds couples de pièces, des pièces qui sont aptes à propager le flux provenant directement ou indirectement de ladite au moins une pièce sélectionnée,
- en fonction des pièces ainsi identifiées, détermination d'au moins un chemin emprunté par le flux à partir de ladite au moins une pièce sélectionnée.

L'invention a également pour objet un procédé de fabrication d'un assemblage de pièces et qui comprend, préalablement, la détermination d'au moins un chemin emprunté par un flux dans ledit assemblage conformément au procédé brièvement exposé ci-dessus.

Le procédé brièvement exposé ci-dessus fournit, à partir d'une représentation aussi fidèle que possible de l'assemblage une analyse qualitative du comportement de cet assemblage vis-à-vis d'un critère de conception. Cette analyse est faite en vue de la fabrication de l'assemblage et diffère donc fortement d'un modèle qui serait établi sur la base des éléments finis.

On comprend l'intérêt de l'utilisation d'un procédé déterminant au moins un chemin emprunté par un flux dans une telle structure de pièces dans un procédé de fabrication de celle-ci puisque l'on réalise ainsi un gain de temps et un gain économique sur l'ensemble du processus de fabrication.

L'invention a également pour objet un programme d'ordinateur chargeable sur un système informatique et qui comprend des séquences d'instructions pour mettre en oeuvre les étapes du procédé brièvement exposé ci-dessus, lorsque ce programme est chargé sur le système informatique et y est exécuté.

D'autres caractéristiques et avantages apparaîtront au cours de la description qui va suivre, donnée uniquement à titre d'exemple non limitatif et faite en référence aux dessins annexés, sur lesquels :

- la figure 1 est une représentation schématique en perspective d'une structure d'aéronef ;
- la figure 2 est un algorithme d'élaboration d'une matrice de connectivité ;
- la figure 3 est une vue agrandie de la matrice de connectivité obtenue par l'algorithme de la figure 2 ;
- la figure 4 est un algorithme d'élaboration d'une matrice d'effectivité ;
- la figure 5 est un algorithme d'établissement d'une liste des matériaux utilisés pour la réalisation des pièces de l'assemblage ;
- la figure 6 est un algorithme de détermination de la propagation du flux électrique dans la structure de la figure 1 ;
- la figure 7 est une vue schématique d'un premier moyen de visualisation de la propagation du flux dans la structure de la figure 1 ;
- la figure 8 est une vue schématique d'un second moyen de visualisation de la propagation du flux dans la structure de la figure 1 ;
- la figure 9 est une vue schématique d'un troisième moyen de visualisation de la propagation du flux dans la structure de la figure 1 ;
- la figure 10 est une vue schématique simplifiée d'un processus de fabrication de la structure de la figure 1 dans un environnement CAO en trois dimensions ;
- la figure 11 est une variante de l'algorithme de la figure 6 ;
- la figure 12 est un algorithme de détermination des matériaux utilisés dans la structure de la figure 1 et qui sont incompatibles l'un avec l'autre ;
- la figure 13 est une vue schématique représentant un moyen de visualisation des pièces de la structure de la figure 10 qui sont incompatibles l'une avec l'autre.

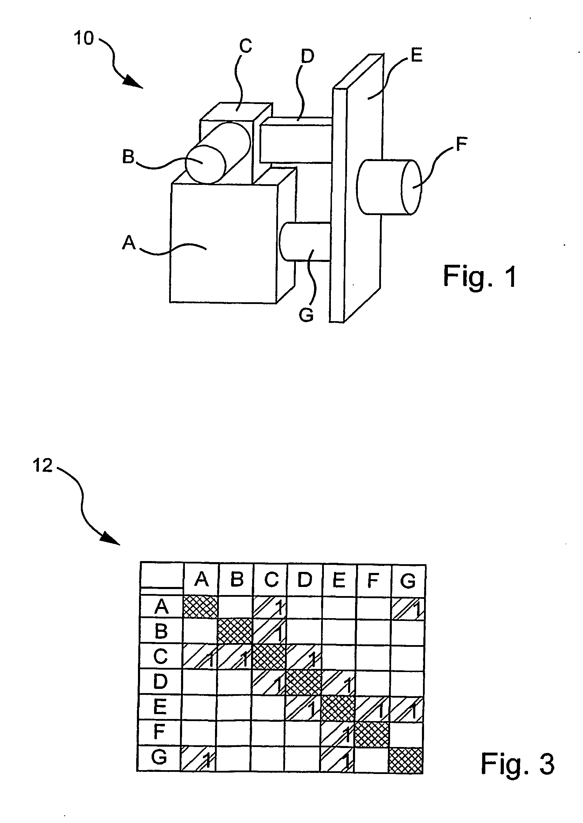

Selon un exemple de réalisation représenté à la **figure 1,** une structure d'aéronef 10 comprend un assemblage de différentes pièces A, B, C, D, E, F et G constitutives de cette structure.

Une telle structure est, par exemple, un mât réacteur (« pylon » en terminologie anglo-saxonne).

Cet exemple de réalisation fait intervenir un faible nombre de pièces mécaniques pour faciliter la compréhension de l'invention alors que, bien entendu, l'invention peut s'appliquer sur des structures complexes comprenant des centaines, voire des milliers de pièces pouvant être conçues par ensembles de pièces séparés dans des endroits éloignés les uns des autres.

Les structures aéronautiques doivent répondre à un certain nombre d'exigences ou de règles (critères) de conception formulées dans des cahiers des charges et, parmi ces exigences, on peut citer la tenue à la foudre de la structure.

Afin de vérifier la conformité d'une structure par rapport à ce critère, il est connu de procéder de façon conventionnelle à des calculs de conductivité électrique qui font intervenir des modèles numériques complexes. Ces modèles se révèlent peu adaptés à la complexité des structures aéronautiques et au grand nombre de pièces dont elles sont composées.

Ainsi, pour s'assurer de la tenue à la foudre de la structure 10 de la figure 1 on vérifie la conductivité électrique de celle-ci par des tests pratiqués sur la structure fabriquée.

On procède, par exemple, à un test réel consistant à mesurer la résistivité électrique entre la pièce A et la pièce F de la structure réalisée.

Toutefois, si la valeur mesurée n'est pas satisfaisante, la structure déjà réalisée s'avère défectueuse, la conception de la structure doit alors être revue et une nouvelle structure est ensuite à nouveau fabriquée puis testée.

La description de l'exemple de réalisation qui va suivre permet de vérifier la conductivité électrique de la structure avant sa fabrication, et donc de pouvoir modifier à moindre frais la structure en cas d'absence de conductivité électrique, par exemple, entre les pièces A et F.

On peut ainsi, par exemple, soit modifier de façon mécanique l'agencement des différentes pièces entre elles, soit remplacer un matériau constitutif d'une de ces pièces par un matériau plus adapté.

Pour vérifier le comportement électrique de la structure, on procède d'abord à l'identification des pièces de l'assemblage et à la détermination des pièces qui sont en contact mécanique les unes avec les autres.

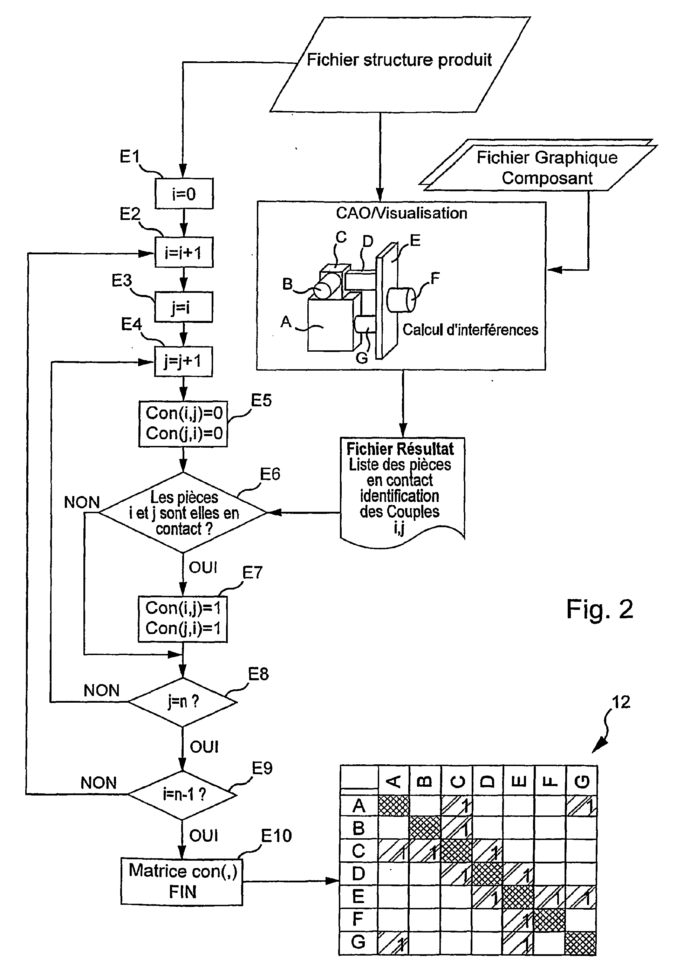

La **figure 2** représente un algorithme de détermination des pièces de l'assemblage qui sont en contact mécanique les unes avec les autres.

Selon cet algorithme, on parcourt et l'on traite aux différentes étapes E1 à E10 les différentes pièces de l'assemblage et, notamment à l'étape E6 on détermine si les pièces de chaque couple de pièces (i, j) sont en contact ou non.

Pour l'exécution de cette étape, il est nécessaire d'élaborer une liste des pièces en contact à partir de fichiers de données numériques de conception (maquettes numériques) définissant l'assemblage des pièces en trois dimensions.

Chaque maquette de conception numérique reproduit fidèlement une pièce de l'assemblage en vue de sa fabrication ultérieure.

La mise en oeuvre de cet algorithme permet d'obtenir un moyen de visualisation des pièces en contact, par exemple, sous la forme d'une matrice 12, appelée matrice de connectivité.

Cette matrice que l'on peut également considérer comme un tableau à deux dimensions comporte des lignes et des colonnes dont les en-têtes sont identiques et correspondent aux différentes pièces de l'assemblage.

Ainsi, on trouve en en-tête des lignes et des colonnes de la matrice 12, les différentes pièces A, B, C, D, E, F et G.

On utilise dans l'algorithme dont la description va suivre les variables i et j pour identifier les coordonnées (i, j) des différents couples de pièces de la matrice.

L'algorithme comporte une première étape E1 d'initialisation à zéro de la variable i et une étape E2 d'incrémentation de cette variable d'une unité.

L'étape suivante E3 fixe la valeur de la variable j à celle de la variable i et l'étape suivante E4 prévoit d'incrémenter la valeur de la variable j d'une unité.

L'étape suivante E5 fixe à zéro les valeurs des éléments de la matrice correspondant aux valeurs des variables i et j précédemment déterminées, soit pour i=j=1 (Con(i,j)=0 et Con(j,i)=0).

Ainsi, les valeurs des éléments de la matrice situés à l'intersection des différentes lignes et colonnes et qui comportent chacune, pour le couple correspondant de pièces, une information sur la présence ou l'absence d'un contact mécanique entre les pièces correspondantes du couple, sont par défaut mises à zéro.

Au cours de l'étape suivante E6 un test est pratiqué afin de déterminer si les pièces correspondant aux variables i et j dont les valeurs ont été précédemment déterminées sont en contact mécanique l'une avec l'autre.

Pour obtenir cette information, on fait par exemple appel à des fichiers graphiques contenant des données numériques définissant des pièces de l'assemblage en trois dimensions (ces fichiers permettent de modéliser les différentes pièces de l'assemblage), par exemple du type fichier natifs de CAO ou des fichiers facétisés comme par exemple des fichiers VRML, 3D/XML,...

Pour décrire la structure de l'assemblage, notamment le positionnement géométrique des différentes pièces dans l'espace, on utilise un fichier d'assemblage de type structure produit ou plusieurs fichiers de ce type.

Un tel fichier structure-produit contient des données numériques définissant l'assemblage des pièces en trois dimensions (géométrie...). Un tel fichier peut également contenir, par exemple, des informations sur les matériaux des pièces.

Ces deux types différents de fichiers (fichiers graphiques et fichiers structure-produit) sont ensuite exploités dans un outil de visualisation du type, par exemple, DVISE ou Product View commercialisés par la société Parametric Technology pour les fichiers facétisés et sont exploités dans un environnement de type CAO pour les fichiers natifs.

Ainsi, à partir des fichiers décrivant les différentes pièces constitutives de l'assemblage (fichiers natifs CAO ou fichiers facétisés) et des fichiers décrivant la structure de l'assemblage, l'outil de visualisation permet de visualiser l'assemblage 10 représenté à la figure 1.

La visualisation peut intervenir sur un moniteur et l'utilisateur sélectionne à l'écran l'assemblage, ou une partie de l'assemblage, lorsqu'il s'agit d'un assemblage constitué de plusieurs milliers de pièces (il peut ainsi travailler sur des sous-ensembles de cet assemblage) et lance l'exécution d'un moteur de calcul d'interférences sur l'assemblage ainsi sélectionné.

Un moteur de calcul d'interférences est, par exemple, fourni avec l'outil de visualisation Product View précité.

Le calcul d'interférences effectué sur les différentes pièces de l'assemblage sélectionné permet d'identifier toutes les pièces de l'assemblage qui sont en contact mécanique les unes avec les autres.

On notera que pour définir les pièces en contact les unes avec les autres par un calcul d'interférences, il faut spécifier préalablement au moteur un jeu mécanique minimum autorisé entre deux pièces, c'est-à-dire définir la distance séparant ces deux pièces sous la forme d'un seuil minimal.

En dessous de ce seuil, les deux pièces ne sont plus considérées comme étant en contact l'une avec l'autre mais comme étant « interpénétrantes », ce qui correspond à une erreur de conception.

A l'issue des calculs effectués par le moteur de calcul d'interférences on obtient des résultats dans un fichier sous la forme d'une liste des couples de pièces en contact.

On notera que, lors de cette étape, on peut également repérer les pièces qui sont dans une enveloppe ou un volume géométrique donné ou, de façon plus générale, qui doivent respecter certaines contraintes de conception.

A partir de ces résultats, soit l'on considère à l'étape E6 que les pièces i et j sont en contact ou en relation (contact indirect, par exemple, à travers une enveloppe géométrique) l'une avec l'autre et l'on aboutit ainsi à l'étape suivante E7, soit les pièces ne sont pas en contact et l'on contourne l'étape E7 précitée.

Au cours de l'étape E7, on met à 1 les valeurs correspondant aux éléments de la matrice correspondant aux couples de pièces (i, j) pour lesquelles un contact mécanique est identifié.

Bien entendu, si la pièce i est en contact avec la pièce j alors la pièce j est également en contact avec la pièce i, ce qui assure la symétrie de la matrice de connectivité ou du tableau correspondant par rapport à la diagonale.

Au cours de l'étape suivante E8, un test est pratiqué sur la valeur de la variable j afin de savoir si toutes les pièces j pour la valeur de la variable i précitée ont bien été parcourues.

Si ce n'est pas le cas, alors on passe à l'étape E4 déjà décrite ci-dessus pour incrémenter d'une unité la valeur de la variable j.

Dans le cas contraire, on passe à l'étape suivante E9 pour identifier si la valeur de la variable i n'a pas atteint la valeur n-1, où n désigne la dernière pièce de l'assemblage et, dans la négative, on passe à l'étape E2 déjà décrite ci-dessus pour incrémenter la variable i d'une unité.

Dans le cas contraire, l'étape E9 est suivie de l'étape E10 mettant fin à l'algorithme de la figure 2.

On notera qu'au fur et à mesure que des valeurs Con(i, j) sont attribuées aux couples (i, j) des différents éléments de la matrice, la valeur correspondante est entrée dans la matrice pour l'élément concerné situé à l'intersection des ligne i et colonne j correspondantes.

Ainsi, comme représenté sur la figure 2 les résultats de l'identification des pièces de l'assemblage qui sont en contact mécanique les unes avec les autres sont représentés et visualisés par la matrice ou le tableau 12.

Cette matrice permet de visualiser pour chaque couple de pièces de l'assemblage l'information sur la présence (1) ou l'absence d'un contact mécanique entre les pièces correspondantes du couple concerné.

On peut ainsi prendre en compte la nature de la relation entre les pièces (contact direct, contact indirect par l'intermédiaire d'une enveloppe...).

C'est ainsi que la matrice 12 représentative de l'assemblage permet de détecter un contact mécanique entre les couples de pièces suivants, appelés premiers couples de pièces :

(A,C) ; (C, B) ; (C, D) ; (A, G) ; (D, E) ; (G, E) ; (E, F).

Il s'agit d'un exemple de moyen de représentation des contacts mécaniques au sein de l'assemblage considéré et, éventuellement, en tenant compte de contraintes géométriques telles qu'un volume géométrique ou une interaction spatiale avec un environnement donné.

La **figure 3** illustre la matrice de connectivité 12 de la figure 2, qui permet de visualiser les premiers couples de pièces de l'assemblage.

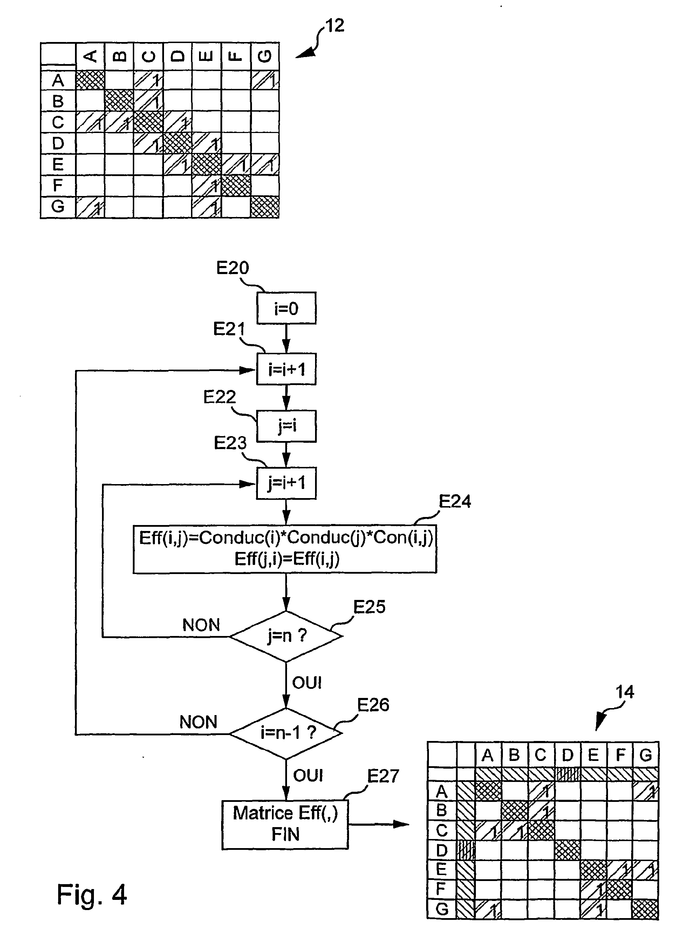

Cette matrice est mémorisée pour être utilisée par la suite, notamment en relation avec la figure 4.

On va ensuite construire grâce à l'algorithme de la **figure 4** et à partir de la matrice 12 de la figure 2 une matrice ou tableau à deux dimensions permettant d'identifier, sous la forme de seconds couples de pièces, les pièces de l'assemblage qui sont en contact électrique les unes avec les autres. Cette nouvelle matrice sera appelée matrice d'effectivité.

Les différentes étapes E20 à E27 permettent de parcourir et de traiter toutes les pièces de l'assemblage et notamment de déterminer, à l'étape E24, si, pour le couple (i, j) considéré, il y a un contact électrique ou non (aptitude ou non à propager le flux électrique).

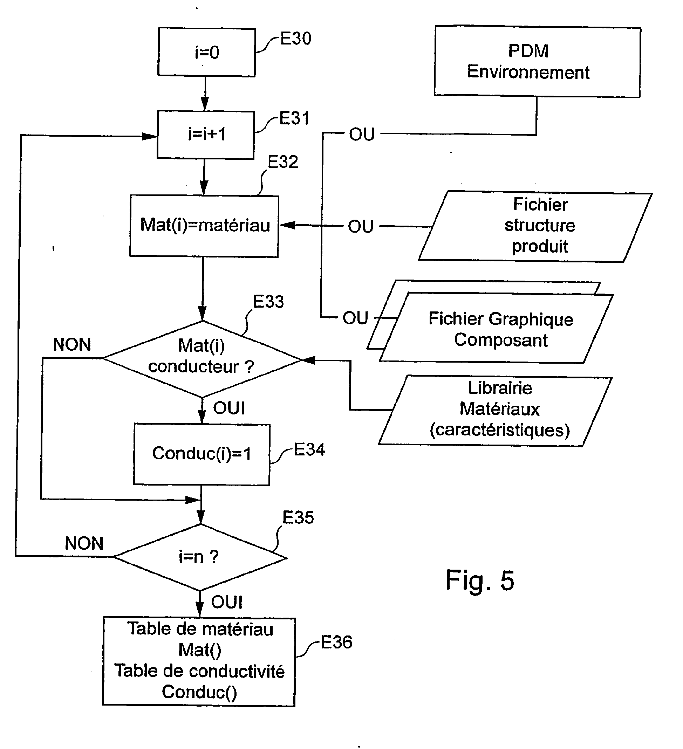

On notera que pour l'exécution de l'étape E24 de cet algorithme, l'exécution de l'algorithme de la figure 5 qui sera décrit ci-après est nécessaire.

Cet algorithme prend en effet en compte les propriétés des matériaux constitutifs des différentes pièces de l'assemblage afin de déterminer si celles-ci conduisent ou non le flux.

On part ainsi de la matrice de connectivité 12 des figures 2 et 3 et l'on fixe aux étapes E20, E21, E22 et E23 de l'algorithme les variables i et j qui permettent de parcourir les différents éléments de cette matrice.

Les étapes précitées sont identiques respectivement aux étapes E1, E2, E3 et E4 de la figure 2.

Au cours de l'étape suivante E24 on détermine l'effectivité de la relation entre deux pièces à partir, d'une part, de la conductivité électrique des matériaux constitutifs de chaque pièce du couple considéré (Conduc (i) et Conduc (j)) et, d'autre part, de la valeur Con (i, j) représentative du contact mécanique pour le couple de pièces correspondantes dans la matrice 12.

Dans la mesure où cette dernière valeur est non nulle (contact mécanique uniquement pour les premiers couples de pièces de l'assemblage), cela revient à identifier parmi ces premiers couples les pièces de l'assemblage qui sont en contact électrique les unes avec les autres.

Bien entendu, la matrice d'effectivité est symétrique ce qui signifie que Eff (j, i)= Eff (i, j).

Les informations sur la conductivité électrique des matériaux constituant les pièces de l'assemblage et, notamment, les pièces des premiers couples de pièces, sont obtenues par l'algorithme de la figure 5 qui sera décrit ci-après.

D'une façon générale, on détermine au cours de cette étape les pièces de l'assemblage qui satisfont au critère de conception prédéterminé afin de former des seconds couples de pièces.

Ainsi, on peut déterminer des pièces ayant subi un traitement particulier (étanchéité, peinture...) ou les pièces qui ont été modifiées à partir d'une pièce de l'assemblage modifiée (analyse de la propagation de la modification).

Lors de l'étape E24, on peut ainsi choisir de prendre en compte toutes les pièces des premiers couples ou ne prendre en compte que les pièces qui sont susceptibles d'être modifiées (car, par exemple, l'état d'avancement de la conception de certaines pièces ne leur permet plus d'être impactées par la modification).

Au cours de l'étape suivante E25 un test est pratiqué sur la valeur de la variable j afin de déterminer si toutes les pièces de la ligne i précitées ont été parcourues.

Dans la négative l'étape E23 déjà décrite ci-dessus est de nouveau exécutée pour incrémenter la valeur de la variable j d'une unité.

Dans le cas où toute la ligne i de la matrice a été parcourue, l'étape E25 est suivie d'une autre étape de test E26 afin de déterminer si la variable i a atteint la valeur n-1, où n désigne la dernière pièce de l'assemblage.

Dans la négative, l'étape E21 déjà décrite ci-dessus est de nouveau exécutée afin d'incrémenter d'une unité la valeur de la variable i.

Dans le cas contraire, il est mis fin à l'algorithme par l'étape E27.

Ainsi, au fur et à mesure de l'exécution des étapes de l'algorithme les différentes cases du tableau de la matrice 14 situées à l'intersection des différentes lignes et colonnes sont remplies avec les valeurs adaptées aux couples correspondants de pièces.

Ces valeurs comprennent une information sur la présence ou l'absence d'un contact électrique entre les pièces correspondantes du couple concerné.

L'information représentative de la présence d'un contact électrique entre deux pièces d'un couple de pièce correspond à la valeur 1.

En cas d'absence de contact électrique entre deux pièces la case correspondante est soit mise à zéro soit non remplie.

Ainsi, le tableau ou matrice 14 qui est mémorisé permet de visualiser les seconds couples de pièces de l'assemblage pour lesquels les pièces correspondantes du couple sont en contact électrique l'une avec l'autre.

On identifie ainsi les seconds couples suivants: (A, C) ; (A, G) ; (B, C) ; (E, F) ; (E, G).

Par ailleurs, les pièces de l'assemblage qui ne sont pas conductrices sont par exemple repérées par une couleur ou un marquage différent.

En l'espèce, dans la structure illustrée à la figure 1 la pièce D est non conductrice et cette propriété est, par exemple, représentée par des hachures dans le tableau 14.

De façon générale, la matrice d'effectivité 14 ainsi élaborée rend compte du comportement entre deux pièces initialement identifiées comme étant en contact, en fonction d'un critère de conception prédéterminé associé à chacune des pièces.

Au besoin, les pièces sont subdivisées en sous-pièces ou composants de manière à pouvoir analyser l'assemblage par rapport à des critères qui seraient associés à ces composants et non à l'intégralité de la pièce (traitement d'étanchéité ou de peinture sur une face de la pièce par exemple).

On notera que la matrice d'effectivité est fonction du critère d'analyse de la structure.

On va maintenant décrire en référence à la **figure 5** un algorithme permettant de déterminer pour chacune des pièces de l'assemblage son matériau constitutif et la conductivité électrique de la pièce.

L'algorithme de la figure 5 débute par une étape E30 d'initialisation de la variable i représentative des différentes pièces A à G de l'assemblage.

L'étape suivante E31 prévoit d'incrémenter d'une unité la valeur de cette variable et l'étape suivante E32 affecte un matériau à la pièce i considérée à partir d'un des fichiers mentionnés en relation avec l'algorithme de la figure 2, à savoir fichiers structure-produit, fichiers graphiques, ou bien à partir d'un « Environnement PDM ». On entend par « Environnement PDM » l'environnement lié à la gestion des données de produit (PDM étant l'acronyme de « Product Data Management » en terminologie anglo-saxonne) et dont est, par exemple, issu le ou les fichiers structure-produit.

Au cours de l'étape suivante E33, il est prévu d'effectuer un test afin de déterminer le caractère conducteur électrique de la pièce i considérée en fonction de son matériau.

Cette étape est réalisée, par exemple, à partir d'une librairie des matériaux utilisés et de leurs caractéristiques notamment physiques (conductivité, résistivité, conductivité thermique ...).

En pratique, cette étape de détermination des matériaux qui sont conducteurs électriques ou non conducteurs électriques est effectuée par rapport à un seuil de conductivité électrique préalablement fixé et en dessous duquel on considère que le matériau n'est pas conducteur.

Lorsque le matériau de la pièce i est considéré comme conducteur électrique alors l'étape E33 est suivie de l'étape E34 au cours de laquelle la valeur de sa conductivité (Conduc (i)) est mise à 1.

En revanche si le matériau de la pièce i n'est pas conducteur, alors l'étape E33 est directement suivie de l'étape E35 au cours de laquelle un test est pratiqué sur la variable i afin de déterminer si toutes les pièces de l'assemblage ont été parcourues.

Dans la négative, l'étape E31 d'incrémentation de la variable i, déjà décrite, est à nouveau exécutée.

Par contre, si toutes les pièces de l'assemblage ont été examinées, alors l'étape E35 est suivie de l'étape E36 au cours de laquelle le tableau élaboré grâce à l'exécution de l'algorithme est validé.

Ce tableau, illustré ci-dessous, permet d'identifier pour chacune des pièces de l'assemblage le matériau utilisé pour la fabrication de cette pièce et son caractère conducteur électrique ou non.

| PIECE | MATERIAU | CONDUCTIVITE |
|-------|----------|--------------|
| A | Titane | 1 |
| B | Acier | 1 |
| C | Titane | 1 |
| D | Plastique | 0 |
| E | Aluminium | 1 |
| F | Aluminium | 1 |
| G | Titane | 1 |

Ces informations sont donc ensuite utilisées à l'étape E24 de la figure 4 pour remplir la matrice d'effectivité 14.

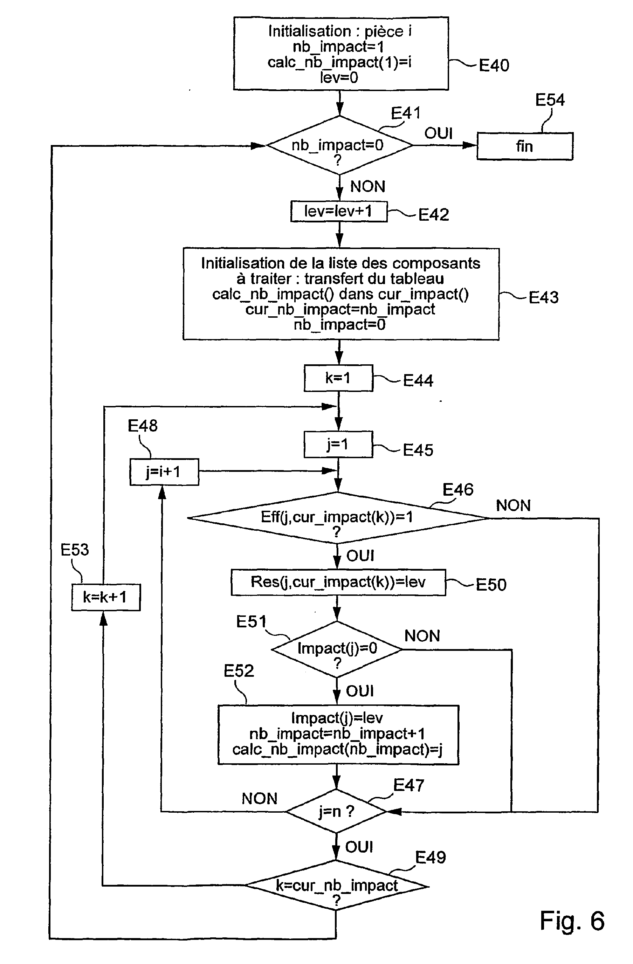

A partir de la matrice d'effectivité de la figure 4, on utilise l'algorithme illustré à la figure 6 pour déterminer la propagation du flux électrique dans la structure représentée sur la figure 1.

En d'autres termes, on va pouvoir déterminer le ou les chemins empruntés par le flux électrique dans cette structure à partir de l'identification des seconds couples de pièces qui sont représentés dans la matrice 14 de la figure 4.

De façon générale, on sélectionne à l'étape E40 une pièce de l'assemblage, on identifie les seconds couples de pièces à l'étape E43, on teste à l'étape E46 si les pièces considérées dans la boucle sont en contact électrique et, dans l'affirmative, on identifie le niveau ou rang de contact correspondant à l'étape E50.

L'algorithme de la figure 6 débute par une étape E40 d'initialisation des différentes variables qui vont être utilisées dans cet algorithme, à savoir i désigne une pièce de l'assemblage, nb_impact est un compteur du nombre de pièces atteintes (ou impactées) par le flux électrique au niveau lev, cur_impact est une liste des pièces nouvellement (pour la première fois) atteintes par le flux au niveau lev-1, cur_nb_impact contient le nombre de pièces atteintes par le flux au niveau lev-1, lev est le niveau de propagation du flux dans la structure ou rang de contact entre les pièces, catc_nb_impact() est une liste des pièces nouvellement atteintes par le flux au niveau lev, Res(i, j) désigne pour le couple (i, j) de pièces en contact électrique la profondeur ou le niveau auquel ce contact est établi, impact(j) indique la profondeur à laquelle une pièce est nouvellement atteinte par le flux.

En particulier, au cours de cette étape, on sélectionne, parmi les pièces de l'assemblage mécanique, au moins une des pièces (pièce i) à partir de laquelle on va déterminer la façon dont le flux électrique se propage dans les pièces des seconds couples.

On initialise ensuite les variables suivantes:

nb_impact = 1
calc_nb_impact(1) = i
lev=0

Au cours de l'étape suivante E41, un test est prévu sur la valeur de la variable nb_impact.

Lorsque cette valeur est non nulle, alors on passe à l'étape suivante E42 qui incrémente d'une unité la variable lev. Cette variable définit le rang du contact ou niveau de propagation courant entre la pièce sélectionnée comme point d'entrée du flux électrique et les autres pièces des seconds couples qui sont en contact avec celle-ci.

En particulier, pour cette première boucle, lev=1 et pour cette valeur on a recherché dans les étapes suivantes les autres pièces des seconds couples qui sont en contact direct avec la pièce sélectionnée.

Au cours de l'étape suivante E43, on identifie toutes les pièces des seconds couples de pièces.

Par ailleurs, au cours de cette étape, on établit les relations suivantes:

cur_impact()=catc_nb_impact()
cur_nb_impact=nb_impact
nb_impact=0.

Ceci permet de lister toutes les pièces dans la variable cur_impact et de déterminer les pièces qu'elles impactent au niveau de propagation lev.

Au démarrage de l'algorithme :

cur_impact(1)=i
cur_nb_impact=1, car il n'y a qu'une seule pièce.

Au cours de l'étape suivante E44, la variable k qui est un compteur des pièces impactées au niveau lev-1 est fixée à 1. Les différentes valeurs prises par k vont permettre de lister toutes les pièces dans la variable cur_impact.

L'étape suivante E45 fixe la valeur de la variable j à 1. Cette variable va prendre, au cours de la boucle qui va qui être décrite, toutes les valeurs de 1 à n permettant de parcourir pour une valeur de cur_impact (k) donnée (pièce sélectionnée) toutes les autres pièces de l'assemblage.

Un test est prévu à l'étape E46 afin de déterminer si les pièces j et cur_impact(k) sont en contact électrique l'une avec l'autre.

Dans la négative, cette étape est suivie de l'étape E47 qui effectue un test sur la valeur de j. Si j n'a pas atteint la valeur n, alors on passe à l'étape E48 qui incrémente d'une unité la variable j et l'étape E46 est de nouveau exécutée afin de déterminer si la nouvelle pièce j est en contact avec la pièce cur_impact(k).

Lorsque le résultat du test de l'étape E47 est positif, alors on passe à l'étape E49 qui sera décrite ultérieurement.

De retour à l'étape E46, lorsque le résultat du test pratiqué est positif, c'est-à-dire qu'un contact électrique existe entre les pièces considérées, alors on passe à l'étape E50.

Au cours de cette étape, on inscrit pour le couple de pièces concerné le rang de contact (profondeur ou niveau de propagation) entre ces pièces.

A titre d'exemple, en partant de la pièce C comme pièce sélectionnée, le rang de contact entre la pièce C et la pièce A est de 1 et on écrit ainsi selon l'étape E50 Res(1,3)=1.

L'étape suivante E51 consiste en un test sur la valeur de la variable Impact(j).

Si la valeur de cette variable est égale à zéro, cela signifie que la pièce concernée n'a pas encore été traitée par l'algorithme (en d'autres termes cela signifie que cette pièce n'a pas encore été impactée par le flux électrique) et on passe alors à l'étape suivante E52.

Si, au contraire, la pièce j a été traitée, alors on passe directement à l'étape de test E47, puis à l'étape E48 d'incrémentation de la variable j en cas de test négatif. L'étape E48 déjà décrite est ensuite à nouveau exécutée. Ainsi, la pièce j ne sera donc pas prise en compte pour le traitement du niveau lev+1.

L'étape E52 prévoit d'impacter la pièce j au niveau de propagation courant lev qui est ici égal à 1 pour la première boucle de l'algorithme.

On incrémente ensuite la variable nb_impact d'une unité, afin de prendre en compte le nombre des pièces nouvellement impactées par le flux pour le niveau de propagation courant.

On identifie ensuite le rang de la pièce nouvellement impactée par le flux pour le niveau de propagation courant (catc_nb_impact(nb_impact)=j).

On établit ainsi une liste temporaire des pièces impactées par le flux.

Au cours de l'étape suivante E47, un test est pratiqué sur la valeur de la variable j par rapport à la valeur n afin de déterminer si, pour une pièce i sélectionnée, toutes les pièces j ont été traitées, c'est-à-dire si, partant de la pièce i, le flux se propage jusqu'à chacune des autres pièces de l'assemblage.

Si toutes les pièces n'ont pas été traitées, alors l'étape E47 est suivie de l'étape E48 déjà décrite ci-dessus, et dans le cas contraire, l'étape E47 est suivie de l'étape E49.

Au cours de cette dernière étape, on pratique un test sur la valeur de la variable k par rapport à la valeur de cur_nb_impact, afin de déterminer si l'ensemble des pièces impactées au niveau lev-1 a été traité.

Si la valeur k n'a pas atteint cette dernière valeur, alors l'étape suivante E53 prévoit d'incrémenter d'une unité la valeur de la variable k. On passe ensuite à l'étape E45 déjà décrite ci-dessus pour parcourir toutes les pièces j de l'assemblage pour cette nouvelle valeur de k.

En cas d'égalité constatée à l'étape E49, cette dernière est suivie de l'étape E41 de test déjà décrite ci-dessus.

Lorsque la valeur nb_impact est égale à zéro cela signifie qu'il n'y a eu aucune pièce nouvellement impactée au niveau lev, alors l'étape E41 est suivie de l'étape E54 qui met fin à l'algorithme.

Dans le cas contraire, l'algorithme est de nouveau exécuté en incrémentant le niveau de propagation courant lev d'une unité à l'étape E42.

En exécutant cet algorithme, on identifie ainsi à partir d'une pièce sélectionnée de l'assemblage les autres pièces en contact électrique direct ou indirect avec celle-ci (par exemple sous forme d'une liste de pièces en contact électrique), ce qui permet d'établir le ou les chemins empruntés par le flux électrique dans la structure à partir de la pièce sélectionnée.

Selon une variante non représentée, il est envisagé à l'étape E51 de traiter les occurrences d'apparition de pièces touchées par le flux. Ainsi, on détermine le nombre de fois où une pièce rencontre le flux, ce qui permet, par exemple, de vérifier les zones de l'assemblage où le flux passe le plus souvent (identification des noeuds de l'assemblage).

De façon plus générale, on peut déterminer le nombre de fois où une même pièce de l'assemblage apparaît dans l'analyse qui est faite par rapport au critère de conception (ceci peut être utile lorsque l'on s'intéresse à l'architecture d'un assemblage de pièces).

Pour tenir compte de ce qui précède, on fait intervenir dans l'algorithme de la figure 6, une nouvelle variable occ (j) qui s'incrémente d'une unité lorsque le résultat de l'étape E51 est négatif (occ (j) = occ (j + 1) et, dans l'étape E52 il est prévu d'indiquer occ (j) = 1.

Après détermination des occurrences, on peut déterminer pour chaque pièce, en fonction de son rang de contact (rang 1 pour un contact direct et rangs supérieurs pour un contact indirect), les pièces qui représentent un risque élevé de conception (par exemple les pièces ayant un rang 1 de contact et un nombre d'apparitions élevé).

Pour ce faire, on peut élaborer un tableau avec sur chaque ligne (de haut en bas) le rang de contact de 1 à n, puis en colonne, le nombre d'occurrences ou équivalent, et à l'intersection d'une ligne et d'une colonne les pièces concernées.

On notera que la détermination d'un chemin conduit à une liste de pièces en contact électrique les unes avec les autres avec le rang ou niveau de contact correspondant.

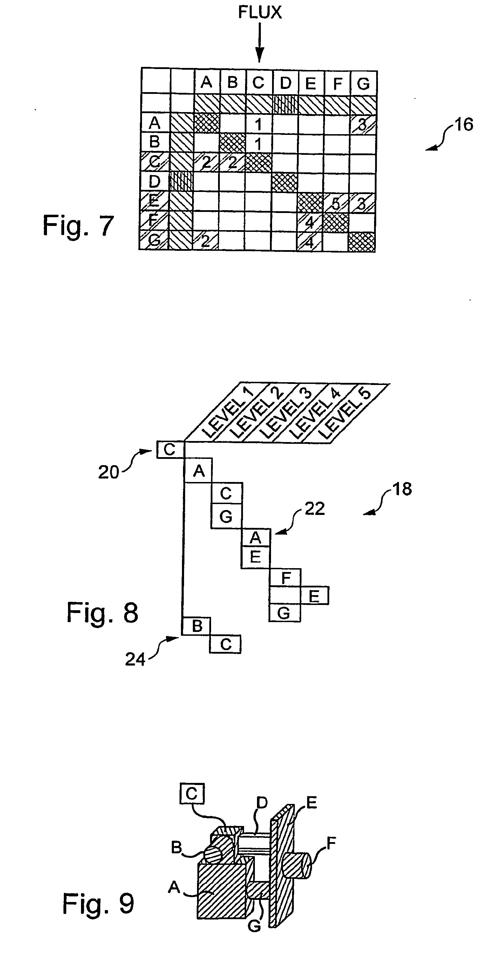

La figure 7 illustre une matrice ou tableau de conductivité 16 qui traduit le comportement électrique de la structure de la figure 1 lorsqu'elle est soumise à un flux électrique.

Ce comportement électrique est déterminé à partir de la matrice effective 14 illustrée à la figure 4 en exécutant l'algorithme de la figure 6.

Pour aboutir à la matrice 16 de la figure 7, on sélectionne parmi les pièces identifiées dans la matrice 14 une pièce, par exemple la pièce C, à partir de laquelle le flux électrique va être introduit dans la structure 10 de la figure 1 comme indiqué par la flèche du dessus sur la figure 7.

A partir de cette pièce C (colonne de la matrice dont l'en-tête est C), on parcourt les autres pièces du second couple de l'assemblage, à savoir les pièces A et B, la pièce D n'étant pas conductrice et donc ne faisant pas partie des seconds couples de l'assemblage.

On identifie ainsi les pièces A et B comme étant des pièces de rang de contact 1, puisqu'elles sont en contact direct avec la pièce sélectionnée C d'où part le flux.

On établit ainsi que la pièce C conduit directement le flux électrique jusqu'aux pièces A et B.

Ensuite, partant de la pièce A (colonne de la matrice correspondant à A) et parcourant les autres pièces des seconds couples de pièces de l'assemblage, on trouve en contact avec la pièce A, soit pour un rang de contact 2, les pièces C et G.

De même, la pièce B (colonne de la matrice correspondant à B) est en contact avec la pièce C.

On notera qu'il s'agit ici d'un rang de contact d'ordre 2 puisque ces pièces impactées ne sont pas directement impactées par le flux provenant de la pièce sélectionnée, mais par l'intermédiaire des pièces A et B.

On établit ainsi que la pièce A conduit le flux jusqu'aux pièces C et G et que la pièce B conduit le flux jusqu'à la pièce C.

Partant de la colonne correspondant à la pièce G, on s'aperçoit que celle-ci est en contact avec la pièce A et avec la pièce E et qu'il s'agit ici d'un rang de contact d'ordre 3.

Ainsi, on établit que la pièce G conduit le flux jusqu'aux pièces A et E.

A son tour, la pièce E (colonne correspondant à la pièce E) est en contact direct avec les pièces F et G pour un rang de contact d'ordre 4.

La pièce E conduit ainsi le flux jusqu'aux pièces F et G.

A son tour, la pièce F(colonne correspondant à la pièce E) est en contact direct avec la pièce E pour un rang de contact d'ordre 5 vis-à-vis de la pièce C et conduit donc le flux jusqu'à la pièce E.

Il convient de noter que l'algorithme de la figure 6 ne prend en compte, à chaque niveau, que les pièces impactées pour la première fois par le flux, contrairement à l'analyse qui vient d'être faite où, par exemple, la pièce C est impactée à plusieurs niveaux de propagation.

La matrice 16 de la figure 7 permet ainsi de visualiser les pièces des seconds couples qui sont en contact électrique direct ou indirect avec la pièce C, le contact indirect étant identifié par un rang de contact supérieur à 1.

Cette matrice permet également de visualiser aisément et rapidement les pièces « en l'air », c'est-à-dire celles qui ne sont en contact avec aucune autre pièce.

En visualisant ces pièces en contact les unes avec les autres et en utilisant l'information sur le rang de contact entre ces pièces, on est en mesure d'établir un ou plusieurs chemins suivis par le flux électrique qui se propagent à partir d'une pièce de la structure telle que la pièce C.

On notera que les différentes cases du tableau (matrice) et les couples de pièces correspondants sont affectés de codes couleurs correspondant aux rangs ou niveaux de contact (niveaux de propagation) entre les pièces desdits couples.

Ainsi, les en-têtes des lignes correspondant aux pièces A et B, l'en-tête de la colonne correspondant à la pièce C et les cases portant le chiffre 1 (niveau 1) aux intersections correspondantes sont, par exemple, en rouge.

De même, pour les contacts aux niveaux 2, 3, 4 et 5, on affecte respectivement, par exemple, les couleurs orange, jaune, vert, bleu.

On notera que d'autres moyens de visualisation des pièces en contact électrique direct ou indirect les unes avec autres et donc du chemin emprunté par le flux dans la structure peuvent être envisagés.

Ainsi, l'arbre 18 de propagation du flux électrique dans la structure et qui est représenté à la **figure 8** constitue l'un de ces moyens qui est mis en oeuvre après exécution de l'algorithme de la figure 6.

Il permet une analyse rapide de la façon dont le flux se propage dans la structure en faisant apparaître clairement les différents niveaux hiérarchiques.

Cet arbre de propagation a pour racine 20 la pièce sélectionnée, à savoir dans l'exemple précité la pièce C, et les branches 22 et 24 de cet arbre sont formées par la succession des pièces des seconds couples avec lesquelles la pièce sélectionnée est en contact direct ou indirect.

Les pièces des seconds couples en contact avec la pièce sélectionnée sont organisées suivant une arborescence hiérarchique qui est établie en fonction de différents niveaux de propagation du flux dans l'arbre.

En d'autres termes, chaque niveau (level_1, levet_2, level_3, level_4, level_5) correspond au rang du contact entre la pièce sélectionnée et les pièces considérées des seconds couples.

Ainsi, ce moyen de représentation fait apparaître plus directement que celui de la figure 7 le chemin emprunté par le flux électrique dans la structure de la figure 1 à partir de la pièce C.

Grâce à cette représentation, on constate rapidement et efficacement que le flux se propage depuis la pièce C jusqu'à la pièce F en passant par des pièces intermédiaires A, G et E.

Cette représentation permet d'éviter les redondances en ce qui concerne les pièces qui ont déjà été impactées à un niveau inférieur (près de la racine de l'arbre).

On notera que des codes couleur peuvent être affectés aux différents rangs ou niveaux de contact (level_1, level_2, level_3, level_4, level_5), aux pièces qui sont rencontrées par le flux une première fois (nouvellement impactées) et à certaines pièces de l'assemblage qui sont impactées par le flux plusieurs fois, à différents niveaux.

Les pièces de l'arbre apparaissent dans des cadres dont la couleur du bord est celle du niveau hiérarchique de contact correspondant.

Ainsi, à titre d'exemple, la pièce A est une première fois impactée par le flux au niveau 1 et est affectée d'une couleur donnée, puis au niveau 3, elle est impactée de nouveau. On peut alors affecter au fond du cadre de la pièce A, lorsqu'elle est impactée une seconde fois au niveau 3, le code couleur rappelant le niveau du premier impact (niveau 1).

De même la pièce G qui est impactée une première fois au niveau 2 se verra affecter une couleur donnée. Lorsque la pièce G reçoit le flux une seconde fois au niveau 4, la couleur du fond du cadre de la pièce G au niveau 4 rappelle le code couleur qui a été affecté à la pièce G au niveau 2.

Il en est de même pour la pièce E impactée au niveau 3 et au niveau 5.

Par ailleurs, un code couleur différent peut être attribué à la pièce C d'où part le flux et qui peut également se retrouver impactée de façon indirecte à des niveaux supérieurs, c'est-à-dire des niveaux plus près des extrémités des branches (niveau 2).

On notera que ce marquage des pièces dans l'arbre permet d'identifier des boucles dans la structure, c'est-à-dire des circuits fermés pour le flux.

Les mêmes codes couleur que ceux affectés à la matrice de la figure 7 sont par exemple utilisés dans l'arbre de la figure 8.

De façon générale, le moyen illustré sur la figure 8 permet d'identifier les boucles dans la structure (flux, étanchéité...) ou l'absence de boucle (ce qui nécessite une modification locale de la structure) et les occurrences (par exemple, le nombre de fois où une pièce rencontre un flux).

La **figure 9** illustre un autre moyen de visualisation des seconds couples de pièces de l'assemblage ainsi que du chemin parcouru par le flux dans cet assemblage.

Il s'agit ici d'une représentation à trois dimensions de la structure 10 de la figure 1 dans laquelle les différentes pièces des seconds couples avec lesquelles la pièce sélectionnée (par exemple C) est en contact direct ou indirect sont identifiées de façon différente suivant le rang du contact.

On reprend par exemple les codes couleur de la figure 8 qui ont été utilisés pour identifier une profondeur particulière dans l'arbre de propagation.

Ainsi, les pièces A, B et C sont représentées dans la même couleur, tandis que les pièces G, E et F sont respectivement représentées avec les codes couleur affectés aux niveaux 2, 3 et 4 de l'arbre de la figure 8.

On notera que les pièces non conductrices sont représentées d'une façon particulière, par exemple la pièce D est illustrée en liaison filaire.

Il s'agit également d'un moyen de détermination efficace et rapide d'un chemin suivi par le flux électrique dans la structure.

On notera qu'en déterminant un tel chemin pour le flux électrique, on est en mesure de détecter des erreurs de conception dans la structure.

En effet, dans l'hypothèse où la pièce G serait également non conductrice, le flux ne pourrait se propager dans la structure jusqu'à la pièce F, ce qui permettrait de s'apercevoir d'erreurs, par exemple, dans le choix des matériaux utilisés pour la fabrication de la pièce D et/ou G.

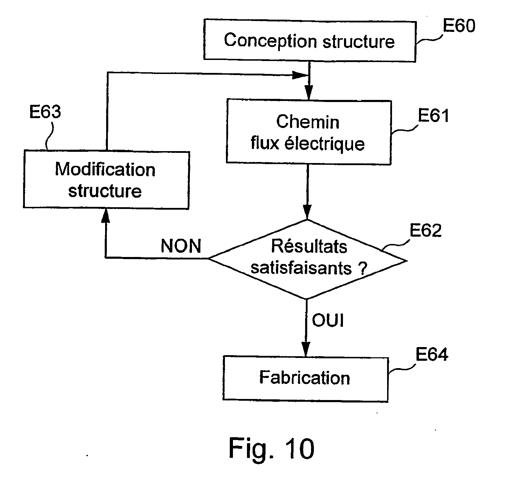

La détermination du chemin emprunté par le flux électrique dans une structure d'aéronef telle que celle de la figure 1 s'inscrit dans le schéma général représenté à la **figure 10** qui définit un environnement CAO en trois dimensions.

Cette figure décrit le processus de fabrication d'une structure d'aéronef qui débute par une étape E60 de conception de la structure. Au cours de cette étape les différentes pièces constitutives de l'assemblage sont définies et assemblées.

C'est également au cours de cette étape que les différents fichiers mentionnés en référence à la description de la figure 2 sont élaborés (représentation géométrique en 3D des pièces, positionnement géométrique des pièces dans l'espace, ...).

Au cours de l'étape suivante E61, on détermine la propagation du flux électrique dans cette structure comme décrit ci-dessus afin de détecter d'éventuelles erreurs de conception.

L'étape suivante E62 est une étape de test qui est effectuée en fonction des résultats de l'étape précédente E61 et qui va conduire à prendre une décision sur la poursuite du processus.

Ainsi, en fonction des résultats obtenus à l'étape E61, il va être décidé soit de revoir la conception de la structure en modifiant l'assemblage de pièces lorsque des erreurs de conception sont détectées (étape E63), soit de poursuivre la fabrication de la structure lorsqu'aucune erreur de conception n'a été détectée (étape E64).

Il convient de noter qu'en cas de modification de la structure soit par changement les matériaux utilisés pour la réalisation des pièces constitutives de l'assemblage, soit par modification de la géométrie même de l'assemblage ou d'une des pièces, on déterminera à nouveau dans la structure ainsi modifiée le chemin emprunté par le flux dans cette dernière afin de s'assurer que la structure est exempte de défaut.

Selon une variante non représentée, il convient de remarquer qu'il est possible de sélectionner plus d'une pièce de l'assemblage à partir de laquelle le flux va se propager dans la structure et, par exemple, deux pièces de l'assemblage peuvent être sélectionnées à cette fin.

Selon une variante de réalisation, il peut être intéressant de localiser dans la structure les pièces non conductrices.

Pour ce faire, il suffit de modifier l'étape E24 de l'algorithme de la figure 4 en prévoyant que cette étape consiste uniquement à effectuer le calcul suivant :

$$Eff(i,j) = Conduc(i) \times Con(i,j).$$

Ceci permet d'obtenir dans le tableau ou la matrice 14 illustré à la figure 4 des valeurs nulles pour toutes les cases de la colonne correspondant à la pièce non conductrice D, tandis que dans la ligne correspondant à la pièce D on trouve des valeurs 1 dans les cases correspondant respectivement à l'intersection de la ligne de la pièce D et des colonnes des pièces C et E.

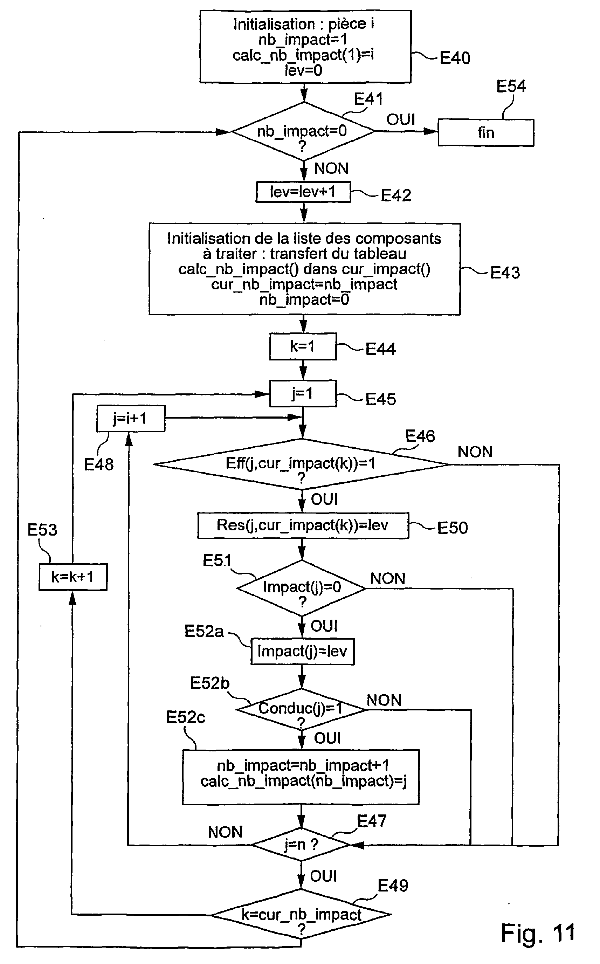

Pour pouvoir visualiser des pièces non conductrices dans le chemin suivi par le flux électrique à travers la structure, l'algorithme de la figure 6 est remplacé par l'algorithme de la **figure 11** dans lequel les étapes E52a, E52b et E52c remplacent l'étape E52 de la figure 6. Le contenu des deux étapes E52a et E52c est le même que celui de l'étape E52.

Toutefois, l'étape ajoutée E52b permet de déterminer si la pièce nouvellement impactée est conductrice ou non.

Grâce à cet algorithme modifié, on est ainsi en mesure de visualiser dans le chemin emprunté par le flux électrique les différentes pièces non conductrices.

Ceci permet, dans certaines circonstances, de détecter rapidement d'éventuelles erreurs de conception.

On notera que la visualisation de ces pièces non conductrices peut être faite à travers un tableau ou une matrice tel que celui de la figure 7, un arbre de propagation tel que celui de la figure 8 ou une représentation tridimensionnelle de la pièce telle que celle de la figure 9.

On notera que la prise en compte des pièces non conductrices se traduit dans l'arbre de propagation par la fin d'une branche.

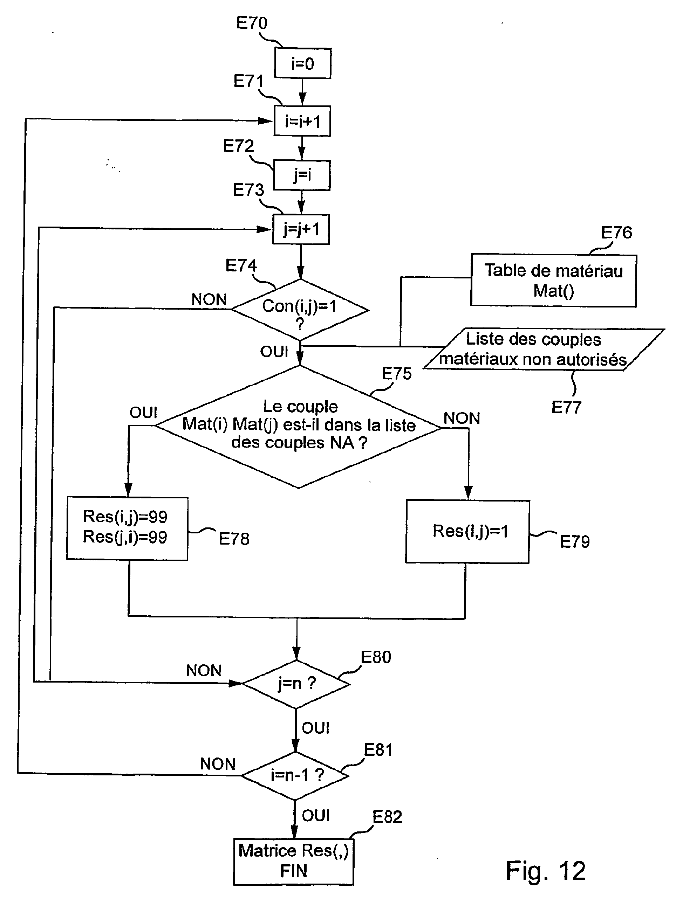

La **figure 12** illustre un algorithme permettant d'identifier dans la structure les matériaux incompatibles les uns avec les autres pour les différentes pièces identifiées dans les couples de pièces de l'assemblage.

De façon générale, on détermine, à l'étape E74, si les pièces i et j d'un couple de pièces de l'assemblage sont en contact l'une avec l'autre et, à l'étape E75, si les matériaux sont compatibles (ou autorisés) ou non (en fonction des étapes E76 et E77), puis on affecte au couple considéré une valeur représentative de la compatibilité ou de l'incompatibilité. Cette valeur est par exemple utilisée dans l'un des algorithmes précédents.

L'algorithme débute par une étape E70 d'initialisation de la variable i à 0, puis d'incrémentation d'une unité de cette variable à l'étape E71.

Les étapes E72 et E73 prévoient respectivement d'égaliser les valeurs des variables j et i et d'incrémenter la valeur de la variable j d'une unité.

On notera que l'on se contente de traiter la moitié dans la matrice (i, j) dans cet algorithme dans la mesure où celle-ci est symétrique.

Au cours de l'étape suivante E74, un test est effectué sur la valeur de la variable Con(i,j) par rapport à la valeur 1 (contact ou absence de contact)

Si cette valeur n'est pas atteinte, alors on passe à une étape de test E80 sur la valeur de la variable j (toutes les pièces de l'assemblage ont-elles été parcourues pour une pièce i donnée ?). Dans la négative, on revient à l'étape précitée E73 pour incrémenter la valeur de la variable j et, dans le cas contraire, on passe à l'étape suivante E81 qui sera décrite ultérieurement.

De retour à l'étape E74, lorsque le résultat du test est positif, alors on passe à l'étape suivante E75.

Cette étape prévoit d'effectuer un test à partir d'une table des différents matériaux utilisés pour les pièces de l'assemblage (E76) et d'une liste de couples de matériaux qui sont incompatibles l'un avec l'autre (E77).

L'élaboration d'une table contenant les différents matériaux utilisés est effectuée à l'étape E76, tandis que l'élaboration d'une liste de couples de matériaux non autorisés est effectuée à l'étape E77.

Le test pratiqué à l'étape E75 consiste à déterminer si les matériaux utilisés pour réaliser les pièces i et j font partie de la liste des couples de matériaux incompatibles l'un avec l'autre.

Dans l'affirmative, l'étape E75 est suivie de l'étape E78 qui prévoit d'attribuer, par exemple, les valeurs prédéfinies Res(i,j)=99 et Res(j,i)=99 qui s'apparentent à un code d'erreur.

Lorsque les matériaux utilisés pour le couple de pièces i et j ne sont pas interdits, alors l'étape E75 est suivie de l'étape E79 qui prévoit de mettre la variable Res(i,j) à 1.

L'algorithme se poursuit par l'étape E80 précitée de test sur la valeur de la variable j.

Comme déjà mentionné, l'étape E80 est soit suivie de l'étape E73 déjà décrite ci-dessus, soit suivie de l'étape E81.

Au cours de cette dernière étape, un test est pratiqué sur la valeur de la variable i par rapport à la valeur n-1 et, en cas d'égalité, il est mis fin à l'algorithme par l'étape E82.

En cas de non égalité, la variable i est incrémentée d'une unité à l'étape E71 déjà décrite ci-dessus et l'algorithme se poursuit comme précédemment indiqué.

On utilise ainsi le modèle de connectivité établi précédemment à la figure 2 pour rechercher d'éventuelles incompatibilités de matériaux dans les différents couples de l'assemblage.

A titre d'exemple, on peut déterminer une telle incompatibilité pour les couples galvaniques, c'est-à-dire les couples de matériaux qui, en présence l'un de l'autre, sont le siège d'un phénomène de corrosion.

Un tel exemple de couple galvanique est illustré par le couple aluminium-titane.

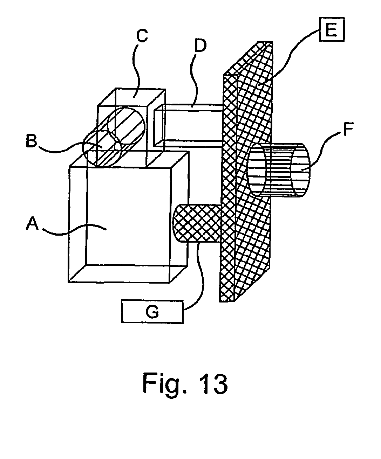

L'algorithme de la figure 12 permet d'obtenir des résultats qui peuvent être illustrés, par exemple, sur une représentation tridimensionnelle de la structure comme illustré sur la **figure 13.**

Sur cette figure, la visualisation des pièces de l'assemblage qui sont incompatibles l'une avec l'autre fait intervenir une couleur ou un marquage spécifique.

Lorsque les pièces de l'assemblage ne présentent pas d'incompatibilité l'une avec l'autre, elles sont représentées, par exemple, en liaison filaire pour une meilleure visualisation.

Dans l'exemple réalisé, le couple de pièces G et E correspond au couple de matériaux titane-aluminium qui est un couple de matériaux non autorisés et il a été représenté par un hachurage spécifique.

On notera que dans la description qui précède des figures 1 à 12, lorsque l'on parle de colonne, ce terme peut être remplacé par le terme ligne et inversement, sans que le principe de l'invention n'en soit modifié.

On notera par ailleurs que les résultats obtenus par les différents algorithmes qui ont été décrits peuvent être visualisés par l'un quelconque des moyens de représentation des figures 7, 8 et 9.

L'invention est également très utile puisqu'elle permet de déterminer le comportement, vis-à-vis de la propagation d'un flux, d'une structure qui est conçue par parties en des endroits géographiquement éloignés les uns des autres et dont les différentes parties ne sont normalement réunies qu'au moment de la fabrication. On peut ainsi constater, avant la réunion physique de ces parties, des problèmes liés à des discontinuités de parties entre elles ou à des différences de géométries entre les parties de l'assemblage final.

Selon une variante non représentée, un calcul du flux électrique traversant la structure et passant dans chacune des pièces de celle-ci peut être réalisé à partir de la matrice effective illustrée à la figure 4.

A cet effet, il conviendrait de calculer pour chacun des couples de pièces en contact la surface de contact entre ces pièces.

Cette surface peut être obtenue par l'intermédiaire de calculs d'interférences qui peuvent être effectués dans un environnement de type CAO.

Le calcul du flux électrique au niveau de chaque pièce parcourue par le flux dans la structure permet de déterminer le comportement de la structure vis-à-vis de phénomènes physiques différents de celui exposé ci-dessus et souvent plus compliqués telle que la mise en évidence d'une élévation de température dans la structure sur une ou plusieurs pièces, les risques d'apparition d'arcs électriques ...

Par ailleurs, l'invention s'applique également de façon plus générale à la détermination d'un chemin emprunté par un flux d'une grandeur physique qui se propage dans une structure comprenant un assemblage mécanique de pièces.

Il peut s'agir, par exemple, d'un flux thermique et l'on identifie alors les pièces de l'assemblage qui sont en contact mécanique les unes avec les autres et ensuite, parmi celles-ci, celles qui permettent d'établir un contact thermique entre elles.

De façon indirecte, on identifie les pièces isolantes et conductrices de la chaleur.

Le reste des opérations est identique à ce qui a été décrit précédemment par rapport au flux électrique pour ce qui est de la détermination des seconds couples de pièces et de la détermination du ou des chemins parcourus par le flux.

On notera que les différents algorithmes précités peuvent faire partie d'un ou de plusieurs programmes d'ordinateur pouvant être chargés sur un système informatique, par exemple, d'une station de travail ou d'un PC. L'exécution de ce ou ces programmes permet de mettre en oeuvre le procédé selon l'invention.

En outre, l'algorithme de la figure 10 peut faire partie en totalité ou partiellement d'un programme d'ordinateur. Par exemple, seule l'étape E61 peut en faire partie.

On notera que la description qui précède, faite en référence aux dessins annexés, concerne plus particulièrement la vérification de la conformité du comportement physique d'une structure (assemblage de pièces) vis-à-vis d'un critère qui est celui de la propagation d'un flux d'une grandeur physique dans la structure.

Toutefois, l'invention est de portée plus générale et vise de façon générale l'analyse du comportement physique d'un assemblage de pièces vis-à-vis de critères de conception qui peuvent différer du critère précité. On peut ainsi prendre en compte d'autres critères afin de déterminer, par exemple, si une structure ou une partie de celle-ci est étanche ou bien si elle a subi un traitement de surface qui pourrait affecter son comportement physique à l'égard de contraintes extérieures ou déterminer la façon dont l'assemblage est modifié globalement à partir d'une modification locale.

L'application du procédé à d'autres critères peut être réalisée simplement en utilisant les algorithmes des figures précitées et en les adaptant lorsque cela est nécessaire.

Ainsi, les étapes de ces algorithmes qui concernent tout particulièrement la propagation d'un flux dans la structure et la détermination d'un chemin emprunté par ce flux sont identiques, seule l'étape E24 de la figure 4 correspondant au traitement de l'effectivité de la relation est remplacée et adaptée au critère prédéterminé auquel doit normalement satisfaire la structure.

De façon générale, les algorithmes restent sensiblement les mêmes, seules les règles de constitution de la matrice d'effectivité de la figure 4 changent en fonction du critère de conception à prendre en compte.

On notera également que l'étape E61 de l'algorithme de la figure 10 est, dans un contexte plus général tel que celui décrit ci-dessus, remplacé par la vérification/détermination de la conformité du comportement physique d'une structure à un ou plusieurs critères prédéterminés.

**Revendications**

1. Procédé d'analyse d'un assemblage de pièces (10) par rapport à au moins un critère de conception prédéterminé permettant de déterminer le comportement physique de l'assemblage, ledit procédé comportant les étapes suivantes effectuées à partir des données de conception représentées par des maquettes numériques représentant chacune, de façon fidèle, en trois dimensions une pièce, l'assemblage des maquettes entre elles définissant l'assemblage des pièces en trois dimensions :

   - identification des pièces de l'assemblage,
   - détermination (E1-E10), parmi les pièces de l'assemblage ainsi identifiées, de plusieurs premiers couples de pièces qui définissent chacun deux pièces en contact mécanique l'une avec l'autre,
   - détermination (E20-E27), parmi les premiers couples de pièces, de plusieurs seconds couples de pièces qui définissent chacun deux pièces conformes audit au moins un critère prédéterminé,
   - détermination (E40-E49), en fonction d'au moins une partie des seconds couples de pièces parmi lesdits plusieurs seconds couples de pièces déterminés, du résultat de l'analyse de l'assemblage de pièces par rapport audit au moins un critère de conception prédéterminé.

2. Procédé selon la revendication 1, **caractérisé en ce que** l'assemblage de pièces comporte plusieurs sous-assemblages ou parties comprenant chacun une pluralité de pièces, les sous-assemblages étant conçus séparément les uns des autres.

3. Procédé selon la revendication 1 ou 2, **caractérisé en ce que** l'analyse de l'assemblage de pièces ou d'une partie de celui-ci par rapport à au moins un critère de conception prédéterminé comprend la détermination (E61) d'au moins un chemin emprunté par un flux d'une grandeur physique dans l'assemblage ou une partie de celui-ci, les étapes du procédé étant plus particulièrement les étapes suivantes:

    - identification des pièces de l'assemblage et détermination des premiers et seconds couples de pièces, l'étape de détermination des seconds couples de pièces étant effectuée en fonction des propriétés des matériaux constitutifs des pièces des premiers couples de pièces, les deux pièces de chaque second couple étant aptes à propager le flux d'une pièce à l'autre,
    - sélection d'au moins une des pièces de l'assemblage,
    - identification, parmi les pièces des seconds couples de pièces, des pièces qui sont aptes à propager le flux provenant directement ou indirectement de ladite au moins une pièce sélectionnée sous la forme d'un ensemble de seconds couples de pièces,
    - en fonction des pièces ainsi identifiées, détermination d'au moins un chemin emprunté par le flux dans l'assemblage ou une partie de celui-ci à partir de ladite au moins une pièce sélectionnée.

4. Procédé selon la revendication 3, **caractérisé en ce qu'**il comporte une étape de détermination du rang de contact entre les pièces identifiées des seconds couples de pièces et ladite au moins une pièce sélectionnée, une pièce en contact direct avec ladite au moins une pièce sélectionnée étant une pièce de rang de contact 1, un contact indirect étant identifié par un rang de contact supérieur à 1.

5. Procédé selon la revendication 3 ou 4, **caractérisé en ce qu'**il comporte une étape de visualisation des pièces des seconds couples de pièces qui sont aptes à propager le flux directement ou indirectement à partir de ladite au moins une pièce sélectionnée.

6. Procédé selon la revendication 4 ou 5, **caractérisé en ce qu'**il comporte une étape de visualisation du rang de contact entre les pièces identifiées des seconds couples de pièces.

7. Procédé selon les revendications 4 et 5, **caractérisé en ce que** les pièces des seconds couples sont visualisées dans un tableau à deux dimensions (14), ayant comme en-têtes de lignes et de colonnes les différentes pièces de l'assemblage et ayant des cases situées à l'intersection des différentes lignes et colonnes et qui comportent chacune, pour le couple correspondant de pièces, une information sur l'aptitude ou non à propager le flux entre les pièces correspondantes du couple et, en cas d'aptitude, chaque case concernée comportant une information sur le rang du contact entre les pièces correspondantes.

8. Procédé selon les revendications 4 et 5, **caractérisé en ce que** les pièces sont visualisées dans un arbre de propagation ayant, pour racine, ladite au moins une pièce sélectionnée et, pour branches, les pièces des seconds couples avec lesquelles elle est en contact direct ou indirect, lesdites pièces des seconds couples étant organisées suivant une arborescence hiérarchique établie en fonction de différents niveaux de propagation dans l'arbre, chaque niveau correspondant au rang du contact entre ladite au moins une pièce sélectionnée et chacune desdites pièces des seconds couples.

9. Procédé selon les revendications 4 et 5, **caractérisé en ce que** les pièces sont visualisées dans une représentation en trois dimensions de l'assemblage, les différentes pièces des seconds couples avec lesquelles ladite au moins une pièce sélectionnée est en contact direct ou indirect étant identifiées de façon différente suivant le rang du contact.

10. Procédé selon l'une des revendications 3 à 9, **caractérisé en ce qu'**il comporte une étape d'identification, parmi les premiers couples de pièces, des pièces non conductrices du flux.

11. Procédé selon l'une des revendications 3 à 10, **caractérisé en ce qu'**il comporte une étape d'identification des pièces qui ne sont en contact mécanique avec aucune autre pièce.

12. Procédé selon l'une des revendications 3 à 11, **caractérisé en ce qu'**il comporte une étape préalable de détermination des matériaux qui sont conducteurs du flux et de ceux qui sont non conducteurs du flux à partir des matériaux constitutifs des différentes pièces de l'assemblage.

13. Procédé selon l'une des revendications 3 à 12, **caractérisé en ce qu'**il comporte une étape de visualisation dudit au moins un chemin emprunté par le flux.

**14.** Procédé selon l'une des revendications 1 à 13, **caractérisé en ce que** l'assemblage de pièces est une structure d'aéronef.

**15.** Procédé de fabrication d'un assemblage de pièces, **caractérisé en ce qu'**il comprend les étapes suivantes :

- analyse de l'assemblage par rapport à au moins un critère de conception prédéterminé selon l'une des revendications 1 à 14 ;
- en fonction du résultat de l'analyse, décision (E62) quant à la fabrication de l'assemblage ou à la modification de l'assemblage de pièces préalablement à la fabrication.

**Claims**

**1.** Method of analyzing an assembly of parts (10) with respect to at least one predetermined design criterion enabling the physical behavior of the assembly to be determined, said method comprising the following steps carried out on the basis of design data represented by digital models, each one faithfully representing a part in three dimensions, the assembly of the models with each other defining the assembly of the parts in three dimensions:

- identification of the parts of the assembly,
- determination (E1-E10), among the parts of the assembly thus identified, of several first pairs of parts, each pair defining two parts in mechanical contact with one another,
- determination (E20-E27), among the first pairs of parts, of several second pairs of parts, each pair defining two parts which conform to said at least one predetermined criterion,
- determination (E40-E49), according to at least some of the second pairs of parts among said determined several second pairs of parts, of the result of the analysis of the assembly of parts with respect to said at least one predetermined design criterion.

**2.** Method according to claim 1, **characterized in that** the assembly of parts contains several subassemblies or portions, each one including a plurality of parts, the subassemblies being designed separately from each other.

**3.** Method according to claim 1 or 2, **characterized in that** the analyzing of the assembly of parts or a portion thereof with respect to at least one predetermined design criterion comprises the determination (E61) of at least one path taken by a flow of a physical quantity in the assembly or a portion thereof, the steps of the method being more particularly the following ones:

- identification of the parts of the assembly and determination of the first and second pairs of parts, the step of determination of the second pairs of parts being done according to the properties of the materials making up the parts of the first pairs of parts, both parts of each second pair being able to propagate the flow from one part to the other,
- selection of at least one of the parts of the assembly,
- identification, among the parts of the second pairs of parts, of the parts which are able to propagate the flow coming directly or indirectly from said at least one selected part in the form of a set of second pairs of parts,
- determination, according to the parts thus identified, of at least one path taken by the flow in the assembly or a portion thereof from said at least one selected part.

**4.** Method according to claim 3, **characterized in that** it comprises a step of determination of the contact rank among the identified parts of the second pairs of parts and said at least one selected part, a part in direct contact with said at least one selected part being a part of contact rank 1, an indirect contact being identified by a contact rank greater than 1.

**5.** Method according to claim 3 or 4, **characterized in that** it comprises a step of visualization of the parts of the second pairs of parts that are able to propagate the flow coming directly or indirectly from said at least one selected part.

**6.** Method according to claim 4 or 5, **characterized in that** it comprises a step of visualization of the contact rank between the identified parts of the second pairs of parts.

**7.** Method according to claims 4 and 5, **characterized in that** the parts of the second pairs are visualized in a table of two dimensions (14), having as row and column headings the different parts of the assembly, and having boxes located at the intersection of the various rows and columns each one containing information, for the corresponding pair of parts, on the ability or lack of ability to propagate the flow between the corresponding parts of the pair and, in case of an ability to do so, each box concerned containing information as to the rank of the contact between the corresponding parts.

**8.** Method according to claims 4 and 5, **characterized**

**in that** the parts are visualized in a propagation tree diagram having as root said at least one selected part and as branches the parts of the second pairs with which it is in direct or indirect contact, said parts of the second pairs being organized according to a hierarchical tree structure established as a function of different levels of propagation in the tree, each level corresponding to the rank of the contact between said at least one selected part and each of said parts of the second pairs.

9. Method according to claims 4 and 5, **characterized in that** the parts are visualized in a three-dimensional representation of the assembly, the different parts of the second pairs with which said at least one selected part is in direct or indirect contact being identified in different manner, depending on the rank of the contact.

10. Method according to one of claims 3 to 9, **characterized in that** it comprises a step of identification, among the first pairs of parts, of the parts that are non-conductive of the flow.

11. Method according to one of claims 3 to 10, **characterized in that** it comprises a step of identification of the parts which are not in mechanical contact with another part.

12. Method according to one of claims 3 to 11, **characterized in that** it comprises a prior step of determination of the materials which are conductive of the flow and of those which are non-conductive of the flow on the basis of the materials constituting the different parts of the assembly.

13. Method according to one of claims 3 to 12, **characterized in that** it comprises a step of visualization of said at least one path followed by the flow.

14. Method according to one of claims 1 to 13, **characterized in that** the assembly of parts is an aircraft structure.

15. Method of manufacture of an assembly of parts, **characterized in that** it comprises the following steps:

 - analysis of the assembly with respect to at least one predetermined design criterion according to one of claims 1 to 14;
 - depending on the result of the analysis, a decision (E62) as to the manufacture of the assembly or the modification of the assembly of parts prior to the manufacture.

**Patentansprüche**

1. Verfahren zur Analyse einer Teileanordnung (10) in Bezug auf wenigstens ein vorbestimmtes Gestaltungskriterium, das ermöglicht, das physikalische Verhalten der Anordnung zu bestimmen, wobei das Verfahren die folgenden Schritte umfasst, die anhand der Gestaltungsdaten durchgeführt werden, die durch digitale Modelle dargestellt sind, welche jeweils ein Teil naturgetreu dreidimensional darstellen, wobei die Anordnung der Modelle untereinander die dreidimensionale Anordnung der Teile definiert:

 - Identifizieren der Teile der Anordnung,
 - Bestimmen (E1-E10) -unter den so identifizierten Teilen der Anordnung- von mehreren ersten Teilepaaren, die jeweils zwei miteinander in mechanischem Kontakt befindliche Teile definieren,
 - Bestimmen (E20-E27) -unter den ersten Teilepaaren- von mehreren zweiten Teilepaaren, die jeweils zwei mit dem wenigstens einen vorbestimmten Kriterium übereinstimmende Teile definieren,
 - Bestimmen (E40-E49) -in Abhängigkeit wenigstens eines Teils der zweiten Teilepaare unter den bestimmten mehreren zweiten Teilepaaren- des Ergebnisses der Analyse der Teileanordnung in Bezug auf das wenigstens eine vorbestimmte Gestaltungskriterium.

2. Verfahren nach Anspruch 1, **dadurch gekennzeichnet, dass** die Teileanordnung mehrere Unteranordnungen oder Teile umfasst, die jeweils eine Vielzahl von Teilen umfassen, wobei die Unteranordnungen getrennt voneinander gestaltet sind.

3. Verfahren nach Anspruch 1 oder 2, **dadurch gekennzeichnet, dass** die Analyse der Teileanordnung oder eines Teils dieser in Bezug auf wenigstens ein vorbestimmtes Gestaltungskriterium das Bestimmen (E61) wenigstens eines von einem Fluss einer physikalischen Größe benutzten Weges in der Anordnung oder einem Teil dieser umfasst, wobei die Schritte des Verfahrens insbesondere die folgenden Schritte sind:

 - Identifizieren der Teile der Anordnung und Bestimmen der ersten und zweiten Teilepaare, wobei der Schritt des Bestimmens der zweiten Teilepaare in Abhängigkeit der Eigenschaften der Werkstoffe, aus denen die Teile der ersten Teilepaare bestehen, durchgeführt wird, wobei die beiden Teile eines jeden zweiten Paars geeignet sind, den Fluss von einem Teil zum nächsten fortzuleiten,
 - Auswählen wenigstens eines der Teile der Anordnung,

- Identifizieren -unter den Teilen der zweiten Teilepaare- der Teile, die geeignet sind, den Fluss, welcher direkt oder indirekt von dem wenigstens einen ausgewählten Teil kommt, fortzuleiten, in Form einer Menge von zweiten Teilepaaren,
- Bestimmen -in Abhängigkeit der so identifizierten Teile- wenigstens eines Weges, der von dem Fluss in der Anordnung oder einem Teil dieser ausgehend von dem wenigstens einen ausgewählten Teil benutzt wird.

4. Verfahren nach Anspruch 3, **dadurch gekennzeichnet, dass** es einen Schritt zum Bestimmen des Kontaktranges zwischen den identifizierten Teilen der zweiten Teilepaare und dem wenigstens einen ausgewählten Teil umfasst, wobei ein mit dem wenigstens einen ausgewählten Teil in direktem Kontakt befindliches Teil ein Teil mit Kontaktrang 1 ist, wobei ein indirekter Kontakt durch einen Kontaktrang größer als 1 identifiziert wird.

5. Verfahren nach Anspruch 3 oder 4, **dadurch gekennzeichnet, dass** es einen Schritt zum Anzeigen der Teile der zweiten Teilepaare, die geeignet sind, den Fluss ausgehend von dem wenigstens einen ausgewählten Teil direkt oder indirekt fortzuleiten, umfasst.

6. Verfahren nach Anspruch 4 oder 5, **dadurch gekennzeichnet, dass** es einen Schritt zum Anzeigen des Kontaktranges zwischen den identifizierten Teilen der zweiten Teilepaare umfasst.

7. Verfahren nach den Ansprüchen 4 und 5, **dadurch gekennzeichnet, dass** die Teile der zweiten Paare in einer zweidimensionalen Tabelle (14) angezeigt werden, die als Zeilen- und Spaltenüberschriften die verschiedenen Teile der Anordnung enthält und die Felder aufweist, welche am Schnittpunkt der verschiedenen Zeilen und Spalten gelegen sind und welche jeweils, für das entsprechende Teilepaar, eine Information über die Fähigkeit oder Unfähigkeit, den Fluss zwischen den entsprechenden Teilen des Paares fortzuleiten, enthalten, und wobei im Falle der Fähigkeit jedes betreffende Feld eine Information über den Rang des Kontakts zwischen den entsprechenden Teilen enthält.

8. Verfahren nach den Ansprüchen 4 und 5, **dadurch gekennzeichnet, dass** die Teile in einem Fortpflanzungsbaum angezeigt werden, dessen Wurzel das wenigstens eine ausgewählte Teil ist und dessen Zweige die Teile der zweiten Paare sind, mit denen es in direktem oder indirektem Kontakt ist, wobei die Teile der zweiten Paare entsprechend einer in Abhängigkeit unterschiedlicher Fortpflanzungsebenen in dem Baum erstellten hierarchischen Baumstruktur organisiert sind, wobei jede Ebene dem Rang des Kontakts zwischen dem wenigstens einen ausgewählten Teil und jedem der Teile der zweiten Paare entspricht.

9. Verfahren nach den Ansprüchen 4 und 5, **dadurch gekennzeichnet, dass** die Teile in einer dreidimensionalen Darstellung der Anordnung angezeigt werden, wobei die verschiedenen Teile der zweiten Paare, mit denen das wenigstens eine ausgewählte Teil in direktem oder indirektem Kontakt ist, entsprechend dem Rang des Kontakts unterschiedlich identifiziert werden.

10. Verfahren nach einem der Ansprüche 3 bis 9, **dadurch gekennzeichnet, dass** es einen Schritt zum Identifizieren -unter den ersten Teilepaaren- der Teile, die den Fluss nicht leiten, umfasst.

11. Verfahren nach einem der Ansprüche 3 bis 10, **dadurch gekennzeichnet, dass** es einen Schritt zum Identifizieren der Teile, die mit keinem anderen Teil in mechanischem Kontakt sind, umfasst.

12. Verfahren nach einem der Ansprüche 3 bis 11, **dadurch gekennzeichnet, dass** es einen vorhergehenden Schritt zum Bestimmen - anhand der Werkstoffe, aus denen die verschiedenen Teile der Anordnung bestehen- der Werkstoffe, die den Fluss leiten und von denjenigen, die den Fluss nicht leiten, umfasst.

13. Verfahren nach einem der Ansprüche 3 bis 12, **dadurch gekennzeichnet, dass** es einen Schritt zum Anzeigen des wenigstens einen von dem Fluss benutzten Weges umfasst.

14. Verfahren nach einem der Ansprüche 1 bis 13, **dadurch gekennzeichnet, dass** die Teileanordnung eine Luftfahrzeugstruktur ist.

15. Verfahren zur Herstellung einer Teileanordnung, **dadurch gekennzeichnet, dass** es die folgenden Schritte umfasst:

- Analyse der Anordnung in Bezug auf wenigstens ein vorbestimmtes Gestaltungskriterium nach einem der Ansprüche 1 bis 14,
- in Abhängigkeit des Ergebnisses der Analyse, Entscheidung (E62) zur Herstellung der Anordnung oder zur Änderung der Teileanordnung vor der Herstellung.

Fig. 1

Fig. 3

Fig. 2

12

| | A | B | C | D | E | F | G |
|---|---|---|---|---|---|---|---|
| A | ▨ | | ╱1 | | | | ╱1 |
| B | | ▨ | ╱1 | | | | |
| C | ╱1 | ╱1 | ▨ | ╱1 | | | |
| D | | | ╱1 | ▨ | ╱1 | | |
| E | | | | ╱1 | ▨ | ╱1 | ╱1 |
| F | | | | | ╱1 | ▨ | |
| G | ╱1 | | | | ╱1 | | ▨ |

E20 → i=0

E21 → i=i+1

E22 → j=i

E23 → j=i+1

E24 → Eff(i,j)=Conduc(i)*Conduc(j)*Con(i,j)
Eff(j,i)=Eff(i,j)

E25 → NON ← j=n ?

OUI

E26 → NON ← i=n-1 ?

OUI

E27 → Matrice Eff(,)
FIN →

14

| | A | B | C | D | E | F | G |
|---|---|---|---|---|---|---|---|
| | ╱ | ╱ | ╱ | ╱ | ╱ | ╱ | ╱ |
| A | ▨ | | ╱1 | | | | ╱1 |
| B | | ▨ | ╱1 | | | | |
| C | ╱1 | ╱1 | ▨ | | | | |
| D | ╱1 | | | ▨ | | | |
| E | ╱ | | | | ▨ | ╱1 | ╱1 |
| F | | | | | ╱1 | ▨ | |
| G | ╱ | ╱1 | | | ╱1 | | ▨ |

Fig. 4

23

Fig. 5

**Fig. 6**

Fig. 7

Fig. 8

Fig. 9

Fig. 10

Fig. 11

E70

i=0

E71

i=i+1

E72

j=i

E73

j=j+1

E76

Table de matériau
Mat()

E74

NON ← Con(i,j)=1 ?

OUI

E77

Liste des couples
matériaux non autorisés

E75

OUI ← Le couple
Mat(i) Mat(j) est-il dans la liste
des couples NA ? → NON

Res(i,j)=99
Res(j,i)=99    E78

Res(i,j)=1    E79

E80

NON ← j=n ?

OUI

E81

NON ← i=n-1 ?

OUI    E82

Matrice Res(,)
FIN

Fig. 12

Fig. 13

## RÉFÉRENCES CITÉES DANS LA DESCRIPTION

**Documents brevets cités dans la description**

- US 2005080502 A1
- US 2005144196 A1
- JP 6103331 A
- US 6112022 A